# EUROPÄISCHE PATENTSCHRIFT

(11) **EP 3 297 773 B1**
(45) Veröffentlichungstag und Bekanntmachung des Hinweises auf die Patenterteilung: **09.06.2021**
(21) Anmeldenummer: 16713453.5
(22) Anmeldetag: 01.04.2016
(51) Int. Cl.: B05D 7/00, C08G 18/70, C08G 18/79, C08G 18/08, C08G 18/28, C09D 175/04, C08G 18/42, C08L 75/04, C08G 101/00, C08J 9/36

(54) **WÄSSRIGER BASISLACK ZUR HERSTELLUNG EINER BESCHICHTUNG**
AQUEOUS BASE PAINT FOR MAKING A COATING
APPRÊT EN BASE AQUEUSE DESTINÉE À LA FABRICATION D'UN REVÊTEMENT

(30) Priorität: 22.05.2015 EP 15168862
(43) Veröffentlichungstag der Anmeldung: 28.03.2018
(73) Patentinhaber: BASF Coatings GmbH, 48165 Münster (DE)
(72) Erfinder: NOATSCHK, Jens-Henning, 48165 Münster (DE); KUES, Jan-Bernd, 48165 Münster (DE); GARCIA MARTIN, Alberto, 46022 Valencia (ES); SCHILLINGER, Eva-Kathrin, 48145 Münster (DE); RIEDIGER, Dirk, 48317 Drensteinfurt (DE)
(74) Vertreter: BASF IP Association
(86) Internationale Anmeldenummer: PCT/EP2016/057211
(87) Internationale Veröffentlichungsnummer: WO 2016/188655

(56) Entgegenhaltungen:
- WO-A1-97/45475
- DE-A1- 4 137 429
- US-A1- 2006 141 234
- US-A1- 2013 089 731

## Beschreibung

Die vorliegende Erfindung betrifft einen wässrigen Basislack sowie ein Verfahren zur Herstellung einer Beschichtung auf einem Substrat, bei dem durch Aufbringen des Basislacks auf das Substrat eine farb- und/oder effektgebende Basislackschicht auf dem Substrat hergestellt wird. Zudem betrifft die vorliegende Erfindung die Beschichtung selbst. Die so hergestellten Beschichtungen weisen neben einem hochwertigen optischen Erscheinungsbild und guten haptischen Eigenschaften eine hervorragende mechanische Beständigkeit und Flexibilität auf. Der Basislack, das Verfahren sowie die Beschichtung können also besonders gut in solchen Bereichen eingesetzt werden, in denen gleichermaßen optische Qualität und mechanische Stabilität und Flexibilität von beschichteten Substraten erreicht werden muss. So bietet sich das Verfahren beispielsweise, aber nicht ausschließlich, zur Anwendung in der Schuhwarenindustrie bei der Beschichtung von insbesondere Schuhsohlen aus Schaumstoffsubstraten an.

### Stand der Technik

Mechanische Stabilität und Flexibilität sind Eigenschaften, die für Beschichtungen beziehungsweise Lackierungen auf Substraten in unterschiedlichsten industriellen Bereichen absolut wesentlich sind. Mechanische Stabilität, beispielsweise Abrieb- und Steinschlagbeständigkeit, ist selbstverständlich in jedem Anwendungsbereich, der entsprechende äußere Einflüsse mit sich bringt, von tragender Relevanz. Aber auch eine annehmbare Flexibilität ist für die Beschichtung von fast jedwedem Substrat sehr wichtig. Besonders relevant ist die Flexibilität bei der Beschichtung flexibler Substrate wie Schaumstoffen, Textilien und Leder, da die Anwendungsbereiche solcher flexiblen und verformbaren Substratmaterialien entsprechende Verformungsbeanspruchungen auch der Beschichtungen mit sich bringen. Aber ebenfalls auf rigiden Substraten wie Hartkunststoffen, Metall oder Holz ist die Fähigkeit der Beschichtung, bei Verformungsbeanspruchung intakt zu bleiben, sehr wichtig. So können sehr dünne Substrate aus an sich rigiden Werkstoffen in der Anwendung ebenfalls signifikanten Verformungen ausgesetzt sein. Zudem erfordern Veränderungen von Werkstoffen aufgrund von Temperaturunterschieden (Ausdehnungskoeffizient) ebenfalls eine angemessen Flexibilität der Beschichtungen.

Besonders relevant sind die genannten Eigenschaften bei der Beschichtung von flexiblen Substraten wie flexiblen Schaumstoffsubstraten. Schaumstoffe haben sich in vielen industriellen Bereichen als Substratmaterialien für verschiedenste Anwendungen durchgesetzt. Denn sie zeichnen sich durch gute Verarbeitbarkeit, geringe Dichte und variable Möglichkeiten zur Einstellung von Eigenschaftsprofilen (Hart-, Halbhart- und Weichschaumstoffe, thermoplastische oder elastomere Schaumstoffe) aus.

So werden beispielsweise in der Schuhwarenindustrie oft kompressible, elastisch verformbare Schaumstoffe zur Herstellung von Schuhsohlen wie beispielsweise Mittelsohlen eingesetzt. Dass Schuhsohlen enormen mechanischen Beanspruchungen ausgesetzt sind, ist offensichtlich. Beim Gehen und Laufen ist zum einen eine hohe Flexibilität beziehungsweise Elastizität der Sohlen, zu anderen aber auch eine angemessene Beständigkeit gegen mechanische äußere Einflüsse, beispielsweise eine gute Abrieb- und Steinschlagbeständigkeit, gefordert.

Gleichzeitig erfordert der Bereich der Schuhwarenindustrie wie jeder Bereich der Modeindustrie die Möglichkeit, die entsprechenden Waren optisch aufzuwerten und zu individualisieren. Eine entsprechende Farb- und/oder Effektgebung von Schuhsohlen ist in diesem Sinne von großem Interesse.

Die Beschichtung beziehungsweise Lackierung von Schaumstoffsubstraten wie Schuhsohlen ermöglicht genau diese modische Anpassung und Individualisierung.

Allerdings muss es in diesem Fall gelingen, die Beschichtung optisch optimal anzupassen. Neben der reinen Farbgebung ist in der Regel auch ein hoher Mattierungseffekt beziehungsweise geringer Glanz ein wichtiger Faktor. Denn nur so gelingt es, Produkte herzustellen, die ein optisch hochwertiges und edles Profil aufweisen. Zu sehr glänzende Produkte werden in der Regel als "plastikartig" und billig aussehend bewertet.

Viel problematischer ist jedoch, dass der Gesamtaufbau aus Schaumstoffsubstrat und Beschichtung beziehungsweise Lackierung nicht nur rein optisch durch eine gute Farb- und/oder Effektgebung überzeugen muss. Vielmehr muss neben dem Schaumstoffsubstrat auch die Beschichtung selbst beziehungsweise der Gesamtaufbau aus Substrat und Beschichtung die schon oben angesprochene Flexibilität aufweisen. Zudem gilt es, eine hohe mechanische Beständigkeit der Beschichtung zu erreichen. Insgesamt muss also zum einen eine hohe Flexibilität beziehungsweise Elastizität, zum anderen aber auch eine gute Beständigkeit gegen mechanische äußere Einflüsse gegeben sein.

US 2006/0141234 A1 beschreibt gefertigte Artikel, beispielsweise Schuhsohlen, die ein kompressibles Substrat umfassen, welches mit einer wässrigen Beschichtungszusammensetzung beschichtet wurde. Die Zusammensetzung umfasst ein Polyurethanharz mit einer Hydroxylzahl von kleiner 10 und ein Farbmittel. Sie dient zur optischen Aufwertung der Artikel.

WO 2009/101133 A1 offenbart Verbundkörper, die einen Polyurethangrundkörper, beispielsweise einen Polyurethan-Integralschaumstoff, sowie eine darauf aufgebrachte Oberflächenbeschichtung umfassen. Die Oberflächenbeschichtung besteht aus thermoplastischem Polyurethan, welches in Form einer Folie aufgebracht wird. Der Verbundkörper ist stabil gegen UV-Strahlung und mechanische Belastung und kann als Interieurteil von Automobilen oder als Schuhsohle eingesetzt werden.

WO 2008/113755 A1 beschreibt wässrige Dispersionen enthaltend mindestens ein Polyurethan, mindestens ein spezielles Polyisocyanat und eine Silikonverbindung. Die Dispersion dient zur Beschichtung von flächigen Substraten wie Leder, Textil oder Kunststoffen und führt zu einer guten Haptik, Griffigkeit und Reibechtheit.

Trotz dieser vielversprechenden Ansätze besteht insbesondere hinsichtlich einer Kombination aus optischer Qualität und mechanischer Stabilität sowie Flexibilität noch Potential für Verbesserungen.

### Aufgabe

Aufgabe der vorliegenden Erfindung war es also, einen farb- und/oder effektgebenden Basislack bereitzustellen, über den Beschichtungen auf Substraten erhalten werden können, die zunächst eine gute optische Qualität aufweisen. Gleichzeitig aber sollten die Beschichtungen eine hohe mechanische Beständigkeit und Flexibilität aufweisen. Das heißt, sie sollten zu einen eine hohe Flexibilität beziehungsweise Elastizität aufweisen, sodass die entsprechenden Vorteile von insbesondere flexiblen Substraten voll zur Geltung kommen können. Zum anderen aber sollte auch die Stabilität gegen mechanische äußere Einflüsse hervorragend sein. Insbesondere sei auf die Abrieb- und Steinschlagbeständigkeit verwiesen. Zusätzlich sollte der zur Herstellung der Beschichtungen eingesetzte Basislack wässrig sein, um hierdurch ein möglichst gutes ökologisches Profil zu ermöglichen.

### Technische Lösung

Es wurde gefunden, dass die genannten Aufgaben gelöst werden konnten durch einen neuen wässrigen Zweikomponenten-Basislack (b) enthaltend
(b.1) eine Stammkomponente enthaltend
   (1) mindestens ein Polyurethanharz mit einer Hydroxylzahl von 15 bis 100 mg KOH/g und einer Säurezahl von 10 bis 50 mg KOH/g,
   (2) mindestens eine wässrige Dispersion enthaltend Wasser und einen Polyurethanharz-Anteil bestehend aus mindestens einem Polyurethanharz, wobei der Polyurethanharz-Anteil einen Gelanteil von mindestens 50 % aufweist, seinen Glasübergang bei einer Temperatur von kleiner -20°C hat, seinen Schmelzübergang bei einer Temperatur von kleiner 100°C hat und der Anteil des Polyurethanharz-Anteils in der Dispersion 15 bis 60 Gew.-%, bezogen auf die Gesamtmenge der Dispersion, beträgt
   (3) mindestens ein farb- und/oder effektgebendes Pigment, wobei mindestens ein Pigment (3) in Form mindestens einer Pigmentpaste eingesetzt wird, die als Pastenharz mindestens ein Polyurethanharz (1) enthält, und
(b.2) eine Härterkomponente enthaltend
   (4) mindestens ein hydrophil modifiziertes Polyisocyanat (4) mit einem Isocyanatgehalt von 8 bis 18 gew.-%.

Der oben genannte wässrige Basislack wird in der Folge auch als erfindungsgemäßer Basislack bezeichnet und ist dementsprechend Gegenstand der vorliegenden Erfindung. Bevorzugte Ausführungsformen des erfindungsgemäßen Basislacks sind der weiter unten folgenden Beschreibung sowie den Unteransprüchen zu entnehmen. Weiterhin Gegenstand der vorliegenden Erfindung ist ein Verfahren zur Herstellung einer Beschichtung auf einem Substrat, bei dem durch Aufbringen des Basislacks auf das Substrat eine farb- und/oder effektgebende Basislackschicht auf dem Substrat hergestellt wird. Zudem betrifft die vorliegende Erfindung die Beschichtung selbst.

Der erfindungsgemäße Basislack erlaubt die Herstellung von Beschichtungen auf Substraten, die neben einer hervorragenden optischen Qualität eine enorme Flexibilität beziehungsweise Elastizität und gleichzeitig auch eine gute Stabilität gegen mechanische äußere Einflüsse aufweisen. Die Gesamtaufbauten umfassend die Beschichtung und das Substrat, können damit insbesondere im Fall von Schaumstoffsubstraten besonders gut, aber nicht nur, im Bereich der Schuhwarenindustrie als Schuhsohlen eingesetzt werden.

### Ausführliche Beschreibung

Zunächst seien einige im Rahmen der vorliegenden Erfindung verwendeten Begriffe erläutert.

Das Aufbringen eines Beschichtungsmittels (auch Beschichtungszusammensetzung genannt) auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein. Beispielsweise wird im Rahmen des erfindungsgemäßen Verfahrens die Basislackschicht (B) auf dem Substrat hergestellt, jedoch können zwischen Substrat und Basislack noch weitere Schichten, beispielsweise gängige Haftprimer, angeordnet sein.

Dasselbe Prinzip gilt für das Aufbringen eines Beschichtungsmittels (y) auf eine mittels eines anderen Beschichtungsmittels (x) hergestellte Beschichtungsschicht (X), wodurch eine Beschichtungsschicht (Y) auf der Beschichtungsschicht (X) hergestellt wird. Die Beschichtungsschicht (Y) muss nicht zwangsläufig mit der Beschichtungsschicht (X) in Kontakt stehen, sie muss lediglich darüber, das heißt auf der dem Substrat abgewandten Seite der Beschichtungsschicht (X) angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet.

Selbiges gilt selbstverständlich für das Aufbringen eines Beschichtungsmittels (y) direkt auf eine mittels eines anderen Beschichtungsmittels (x) hergestellte Beschichtungsschicht (X), wodurch eine Beschichtungsschicht (Y) auf der Beschichtungsschicht (X) hergestellt wird. In diesem Fall stehen die beiden Beschichtungsschichten in direktem Kontakt, sind also direkt aufeinander angeordnet. Insbesondere befindet sich keine weitere Schicht zwischen den Beschichtungsschichten (X) und (Y). Dasselbe Prinzip gilt selbstverständlich für ein direkt aufeinanderfolgendes Aufbringen von Beschichtungsmitteln beziehungsweise die Herstellung von direkt aufeinanderfolgenden Beschichtungsschichten.

Unter Ablüften, Zwischentrocknen und Härten werden im Rahmen der vorliegenden Erfindung die dem Fachmann im Zusammenhang mit Verfahren zur Herstellung von Mehrschichtbeschichtungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Da das Beschichtungsmittel jedenfalls direkt nach dem Auftragen und zu Beginn des Ablüftens noch fließfähig ist, kann es während des Ablüftens verlaufen. Denn zumindest ein durch Spritzapplikation aufgetragenes Beschichtungsmittel wird in der Regel tröpfchenförmig und nicht in homogener Dicke aufgetragen. Es ist aber durch die enthaltenen organischen Lösemittel und/oder Wasser fließfähig und kann somit durch das Verlaufen einen homogenen, glatten Beschichtungsfilm bilden. Gleichzeitig verdunsten organische Lösemittel und/oder Wasser sukzessive, sodass nach der Ablüftphase eine vergleichsweise glatte Beschichtungsschicht entstanden ist, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man somit ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 70°C, für eine Dauer von beispielsweise 1 bis 30 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann. Dabei können, abhängig vom Beschichtungsmittel, der Abdunsttemperatur und Abdunstdauer, mehr oder weniger hohe Anteile der im Beschichtungsmittel enthaltenen organischen Lösemittel und/oder Wasser abdunsten. Gegebenenfalls kann dabei sogar bereits ein Anteil der in den Beschichtungsmittel enthaltenen Polymere als Bindemittel wie unten beschrieben miteinander vernetzen oder verschlaufen. Sowohl beim Ablüften als auch beim Zwischentrocknen wird aber keine gebrauchsfertige Beschichtungsschicht erhalten, wie dies bei der unten beschriebenen Härtung der Fall ist. Demzufolge ist die Härtung eindeutig vom Ablüften und Zwischentrocknen abgegrenzt.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommt insbesondere die thermisch-chemische Härtung in Betracht.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird. Solche Beschichtungsmittel werden in der Regel als Einkomponenten-Beschichtungsmittel formuliert. Eine Härtung kann beispielsweise zwischen 15 und 100°C über einen Zeitraum von 2 bis 48 Stunden erfolgen. In diesem Fall unterscheidet sich die Härtung vom Ablüften und/oder Zwischentrocken also gegebenenfalls lediglich durch die Dauer der Konditionierung der Beschichtungsschicht.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Beschichtungsschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt. Die Gruppen sind dann in den verschiedenen filmbildenden Komponenten des Beschichtungsmittels enthalten.

Die thermisch-chemische Härtung kann durch Einsatz unterschiedlichster filmbildender Komponenten ermöglicht werden. Typisch ist beispielsweise der Einsatz eines organischen Polymers wie einem Polyester oder Polyurethan enthaltend bestimmte funktionelle Gruppen wie Hydroxylgruppen und einer weiteren Komponente, beispielsweise einem Polyisocyanat und/oder einem Aminoplastharz, die dann durch Reaktion der entsprechend komplementären funktionellen Gruppen zu einem gehärteten Beschichtungsfilm führen können. Der besseren Übersichtlichkeit halber wird das (erste) organische Polymer, beispielsweise der Polyester, oft als Bindemittel, das Polyisocyanat und/oder Aminoplastharz als Vernetzungsmittel bezeichnet.

Je nach Reaktivität der in den filmbildenden Komponenten enthaltenen funktionellen Gruppen, werden solche Beschichtungszusammensetzungen als Einkomponenten- und Mehrkomponentensysteme, insbesondere Zweikomponentensysteme formuliert.

In thermisch-chemisch härtbaren Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C miteinander reagieren, das heißt Härtungsreaktionen eingehen. Eine Härtung wird also bei entsprechenden Bedingungen erfolgen, beispielsweise bei Temperaturen von 100 bis 250°C für eine Dauer von 5 bis 60 min.

In thermisch-chemisch härtbaren Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise zwischen 40 und 100°C miteinander reagieren. Beispielhaft sei auf Hydroxylgruppen oder Aminogruppen einerseits und auf freie Isocyanatgruppen andererseits verwiesen. In der Regel und insbesondere im Rahmen der vorliegenden Erfindung wird ein Zweikomponenten-Beschichtungsmittel so formuliert, dass eine erste Komponente (Stammlackkomponente) und eine zweite Komponenten (Härterkomponente) getrennt voneinander hergestellt und gelagert werden und erst kurz vor der Applikation auf ein Substrat zusammengegeben werden. Die exakte Verarbeitungszeit (das heißt die Zeit, in der das Beschichtungsmittel bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist natürlich abhängig von den eingesetzten Bestandteilen, liegt aber in der Regel zwischen 1 Minute und 4 Stunden, vorzugsweise zwischen 5 und 120 Minuten.

Ebenfalls der thermisch-chemischen Härtung zuzuordnen ist das folgende Prinzip. Eine erste Komponente der Beschichtungszusammensetzung kann unter Zusatz einer weiteren Komponente so reagieren, dass sich anteilig funktionelle Gruppen bilden, die mit weiteren funktionellen Gruppen der ersten Komponente wie oben beschriebene Härtungsreaktionen eingehen können. Auf diese Weise erfolgt dann wieder ein Beitrag zur Filmbildung. Beispielsweise wird ein freies Polyisocyanat, das heißt eine erste Komponente, die im Mittel mehr als eine freie Isocyanatgruppe pro Molekül enthält, nach Zusatz von Wasser als zweite Komponente entsprechend reagieren. Denn freie Isocyanatgruppen reagieren mit Wasser unter Abspaltung von Kohlenstoffdioxid zu freien primären Aminogruppen, welche dann mit noch vorhandenen Isocyanatgruppen durch Additionsreaktion zu Harnstoffbindungen umgesetzt werden.

Eine Beschichtungszusammensetzung, bei deren Härtung diese Form der thermisch-chemischen Härtung zum Einsatz gebracht werden soll, wird damit ebenfalls als Zweikomponenten-Beschichtungszusammensetzung formuliert. Denn sowohl die Hydrolyse der Isocyanatgruppen zu Aminogruppen als auch die Reaktion von Aminogruppen mit Isocyanatgruppen erfolgt bereits bei Umgebungstemperaturen oder leicht erhöhten Temperaturen von beispielsweise zwischen 40 und 100°C. Während also in der einen Komponente das Wasser vorhanden ist, wird das freie Polyisocyanat in die zweite Komponente integriert. Nach dem Zusammengeben der beiden Komponenten entstehen dann primäre Aminogruppen, welche mit noch vorhandenen Isocyanatgruppen reagieren und damit ein Netzwerk bilden können.

Selbstverständlich wird bei der Härtung eines als thermisch-chemisch härtbar gekennzeichnetes Beschichtungsmittel immer auch eine physikalische Härtung, das heißt eine Verschlaufung von Polymerketten, auftreten. Trotzdem wird ein solches Beschichtungsmittel dann als thermisch-chemisch härtbar bezeichnet. Diese Bezeichnung wird also immer dann gewählt, wenn das Beschichtungsmittel anteilig thermisch-chemisch gehärtet werden kann.

Die Härtung von Zweikomponenten-Beschichtungszusammensetzungen erfolgt im Rahmen der vorliegenden Erfindung bevorzugt bei Temperaturen zwischen 40 und 120°C. Die Dauer der Härtung richtet sich natürlich nach den Umständen des Einzelfalls, liegt aber regelmäßig von beispielsweise 5 bis 120 Minuten.

Alle im Rahmen der vorliegenden Erfindung erläuterten Temperaturen verstehen sich als Temperatur des Raumes, in dem sich das beschichtete Substrat befindet. Gemeint ist also nicht, dass das Substrat selbst die entsprechende Temperatur aufweisen muss.

Je nach eingesetztem Substrat ist im Rahmen des erfindungsgemäßen Verfahrens selbstverständlich darauf zu achten, dass das Substrat bei der Härtung von darauf aufgebrachten Lackschichten nicht so hoch erhitzt wird, dass es sich zersetzt oder verformt. Schaumstoffsubstrate, welche im Rahmen der vorliegenden Erfindung bevorzugt eingesetzt werden, sind allerdings in der Regel bei Temperaturen von 120°C und höher nicht formstabil. Gegebenenfalls reichen auch schon deutlich niedrigere Temperaturen, um eine Zersetzung oder Verformung des Substrats zu bewirken. Jedenfalls wird die Härtung von Beschichtungsschichten im Rahmen der vorliegenden Erfindung bevorzugt bei unterhalb von 120°C, nochmals bevorzugt unterhalb von 100°C, durchgeführt.

In diesem Zusammenhang verständlich ist auch, dass der Basislack (b) ein Zweikomponenten-Beschichtungsmittel sind. Denn wie oben beschrieben, können diese bei Temperaturen zwischen 40 und 100°C gehärtet werden. Auf diese Weise wird gewährleistet, dass das Substrat lediglich auf Temperaturen von weniger als 100°C erhitzt werden muss. Je nach eingesetzten Substrat, kann es zur nochmals schnelleren Härtung aber auch auf höhere Temperaturen erhitzt werden. Bevorzugt ist aber, dass jegliche Härtungsprozesse im Rahmen des erfindungsgemäßen Verfahrens bei unter 120°C, nochmals bevorzugt bei unter 100°C durchgeführt werden.

Bevorzugt wird das Schaumstoffsubstrat im Rahmen des erfindungsgemäßen Verfahrens nie Temperaturen von 120°C oder höher, bevorzugt nie Temperaturen von 100°C oder höher ausgesetzt.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

### Das erfindungsgemäße Verfahren

Im Rahmen des erfindungsgemäßen Verfahrens wird eine Beschichtung auf einem Substrat (S) hergestellt.

Als Substrate (S) können letztlich alle dem Fachmann bekannten rigiden oder flexiblen Substrate eingesetzt werden, beispielsweise solche aus Metallen, Hartkunststoffen, Holz, Papier und Pappe, Textilien, Lederwaren und Schaumstoffen. Bevorzugt sind im Rahmen der vorliegenden Erfindung flexible Substrate, insbesondere flexible Schaumstoffsubstrate, da bei der Beschichtung solcher Substrate die eingangs genannten Eigenschaften besonders wichtig sind.

Schaumstoffsubstrate seien kurz grundsätzlich vorgestellt. Als Schaumstoffsubstrate (S) kommen letztlich alle dem Fachmann in diesem Zusammenhang bekannten Substrate in Betracht. Grundsätzlich einsetzbar sind also Schaumstoffe, die aus Duroplasten, Thermoplasten, Elastomeren oder Thermoelasten hergestellt werden, das heißt durch entsprechende Schäumverfahren von Kunststoffen aus den genannten Kunststoffklassen erhalten werden. Hinsichtlich ihrer chemischen Basis sind als Schaumstoffe beispielsweise, aber nicht ausschließlich, Polystyrole, Polyvinylchloride, Polyurethane, Polyester, Polyether, Polyetheramide oder Polyolefine wie Polypropylen, Polyethylen und Ethylenvinylacetat sowie Mischpolymerisate der genannten Polymere möglich. Natürlich kann ein Schaumstoffsubstrat auch verschiedene der genannten Polymere und Mischpolymerisate enthalten.

Bevorzugte Schaumstoffsubstrate sind flexible Schaumstoffsubstrate, insbesondere bevorzugt flexible thermoplastische Polyurethanschaumstoffsubstrate. Bei letzteren handelt sich also um Schaumstoffsubstrate, die als polymere Kunststoffmatrix thermoplastisches Polyurethan umfassen. Solche Substrate zeichnen sich grundsätzlich dadurch aus, dass sie kompressibel und elastisch verformbar sind.

Bei der Herstellung der Schaumstoffe wird das thermoplastische Polyurethan dann durch entsprechende Schäumverfahren geschäumt, das heißt in einen Schaumstoff überführt.

Schäumverfahren sind bekannt und seien daher nur kurz vorgestellt. Grundlegendes Prinzip ist jeweils, dass im Kunststoff beziehungsweise in einer entsprechenden Kunststoffschmelze gelöste Treibmittel und/oder Gase, die bei Vernetzungsreaktionen bei der Herstellung entsprechender polymerer Kunststoffe entstehen, freigesetzt werden und dadurch das Aufschäumen der zuvor vergleichsweise dichten polymeren Kunststoffe bewirken. Wird beispielsweise als Treibmittel ein niedrigsiedender Kohlenwasserstoff eingesetzt, so verdampft dieser bei erhöhten Temperaturen und führen zum Schäumen. Auch Gase wie Kohlendioxid oder Stickstoff können als Treibmittel bei hohem Druck in die Polymerschmelze eingebracht beziehungsweise gelöst werden. Durch späteren Druckabfall schäumen die Schmelzen dann während des Entweichens des Treibmittelgases auf.

Das Schäumen kann beispielsweise unmittelbar bei der Formgebung entsprechender Kunststoffsubstrate, beispielsweise bei der Extrusion oder beim Spritzguss, erfolgen. Beispielsweise kann die mit Treibmittel versetzte, unter Druck stehende Kunststoffschmelze beim Austritt aus einem Extruder durch den dann auftretenden Druckabfall geschäumt werden.

Möglich ist auch, zunächst treibmittel-haltige Granulate aus thermoplastischem Kunststoff herzustellen und diese Granulate dann nachträglich in einer Form aufzuschäumen, wobei die Granulatkügelchen ihr Volumen vergrößern, miteinander verschmelzen und schließlich ein aus verschmolzenen expandierten Schaumstoffpartikeln (auch genannt thermoplastischer Partikelschaumstoff) bestehendes Formteil bilden. Die expandierbaren Granulate können beispielsweise über Extrusion und anschließende Granulierung des den Extruder verlassenen Polymerstranges gebildet werden. Eine Granulierung erfolgt beispielsweise über entsprechende Schneidvorrichtungen, wobei unter solchen Druck- und Temperaturbedingungen gearbeitet wird, dass keine Expansion auftritt. Die dann folgende Expansion und Verschmelzung der Granulate erfolgt in der Regel mit Hilfe von Wasserdampf bei Temperaturen von um die 100°C.

Ebenso möglich ist es, bei der Herstellung von thermoplastischen Partikelschaumstoffen von bereits vorgeschäumten Kunststoffgranulaten auszugehen. Es handelt sich dabei um Granulate, deren Granulatkügelchen beziehungsweise Polymerpartikel im Vergleich zu nicht vorgeschäumten Granulaten bereits deutlich vergrößerte Partikelgrößen bei entsprechend verringerten Dichten aufweisen. Die Herstellung von gezielt vorgeschäumten Partikeln kann durch entsprechende Prozesssteuerung realisiert werden, wie dies beispielsweise in WO 2013/153190 A1 beschrieben ist. So können extrudierte Polymerstränge beim Verlassen des Extruders in eine Granulierkammer mit einem Flüssigkeitsstrom überführt werden, wobei die Flüssigkeit unter spezifischem Druck steht und eine spezifische Temperatur aufweist. Durch Anpassung der Prozessparameter können spezifische expandierte beziehungsweise vorexpandierte thermoplastische Kunststoffgranulate erhalten werden, die durch nachträgliche Verschmelzung und gegebenenfalls weitere Expansion mit insbesondere Wasserdampf in thermoplastischen Partikelschaumstoffsubstraten überführt werden können.

Thermoplastische Partikelschaumstoffe beziehungsweise entsprechende thermoplastische expandierbare und/oder expandierte Kunststoffgranulate, aus denen solche Partikelschaumstoffe hergestellt werden können, sind beispielsweise in WO 2007/082838 A1, WO 2013/153190 A1 oder auch WO 2008/125250 A1 beschrieben. Darin beschrieben sind auch Prozessparameter und Ausgangsstoffe für die Herstellung von thermoplastischen Polyurethanen sowie Prozessparameter für die Herstellung von Granulaten und Partikelschaumstoffen.

Thermoplastische Partikelschaumstoffe, insbesondere thermoplastische Polyurethan-Partikelschaumstoffe sind insbesondere großtechnisch auf sehr ökonomische Weise herzustellen und zudem hinsichtlich ihres Eigenschaftsprofils besonders vorteilhaft. So lassen sich thermoplastische Partikelschaumstoffe aus thermoplastischen Kunststoffen, insbesondere aus Polyurethanen herstellen, die eine hervorragende Flexibilität beziehungsweise Elastizität und mechanische Stabilität aufweisen. Sie sind in der Regel kompressibel und gut elastisch verformbar. Demzufolge eignen sich gerade diese Schaumstoffe besonders gut als Schaumstoffsubstrate für Anwendungen in Bereichen wie der Schuhwarenindustrie. Ganz besonders bevorzugte Substrate sind also kompressible, elastisch verformbare Partikelschaumstoffsubstrate, die als polymere Kunststoffmatrix thermoplastisches Polyurethan enthalten.

Die Substrate, bevorzugt die flexiblen Schaumstoffsubstrate, können an sich beliebig geformt sein, das heißt es kann sich beispielsweise um einfache flächige Substrate oder auch um komplexere Formen wie insbesondere Schuhsohlen wie Schuhmittelsohlen handeln.

Im Rahmen des erfindungsgemäßen Verfahrens wird eine Basislackschicht (B) hergestellt. Die Herstellung erfolgt durch Aufbringen eines erfindungsgemäßen wässrigen Basislacks (b) auf das Substrat (S) und anschließende Härtung des aufgebrachten Basislacks.

Der Basislack kann direkt auf das Substrat aufgebracht werden, das heißt zwischen dem Substrat und dem Basislack sind keine weiteren Schichten angeordnet. Genauso möglich ist es aber, dass auf dem Substrat zunächst mindestens eine andere Beschichtungsschicht wie eine Haftprimerschicht hergestellt wird. Da aber trotz des Verzichts auf solche anderen Beschichtungsschichten eine hervorragende Haftung erzielt wird und dieser Verzicht zu einer enormen Vereinfachung des Verfahrens führt, wird bevorzugt der erfindungsgemäße Basislack (b) direkt auf das Substrat appliziert.

Die Begriffe Basislack und Basislackschicht werden der besseren Übersichtlichkeit halber verwendet. Unter einem Basislack ist ein in der allgemeinen Industrielackierung eingesetzter farb- und/oder effektgebender Beschichtungsstoff zu verstehen.

Die erfindungsgemäßen Basislacke (b) werden weiter unten im Detail beschrieben. Durch die Anwesenheit von Wasser in der Stammlackkomponente und die Komponente (4) in der Härterkomponente handelt es sich aber jedenfalls um thermisch-chemisch härtbare Zweikomponenten-Beschichtungszusammensetzungen.

Die Basislacke (b) können durch die dem Fachmann bekannten Methoden zur Applikation von flüssigen Beschichtungsmitteln aufgebracht werden, beispielsweise durch Tauchen, Rakeln, Spritzen, Walzen oder ähnlichem. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heißspritzapplikation wie zum Beispiel Hot-Air (Heiß-Spritzen). Ganz besonders bevorzugt werden die Basislacke über die pneumatische Spritzapplikation oder die elektrostatische Spritzapplikation aufgetragen.

Durch die Applikation des Basislacks (b) wird somit eine Basislackschicht (B), das heißt eine auf dem Substrat (S) aufgetragene Schicht des Basislacks (b), hergestellt.

Der aufgetragene Basislack wird gehärtet. Vor der Härtung wird der aufgetragene Basislack bevorzugt bei 15 bis 35°C für eine Dauer von 0,5 bis 30 min abgelüftet beziehungsweise zwischengetrocknet. Die Härtung erfolgt bevorzugt bei Temperaturen zwischen 40 und 120°C, nochmals bevorzugt zwischen 60 und 100°C, für eine Dauer von beispielsweise 5 bis 120 Minuten, bevorzugt 20 bis 60 Minuten. Auf diese Weise wird auch vermieden, dass sich insbesondere bevorzugte Substrate zersetzen oder verformen können.

Der Auftrag der Basislacke (b) erfolgt so, dass die Basislackschicht (B) nach der Härtung eine Schichtdicke von beispielsweise 3 bis 50 Mikrometer, bevorzugt 5 bis 40 Mikrometer aufweist.

Nach der Härtung resultiert eine erfindungsgemäße Beschichtung.

Bevorzugt ist, dass die erfindungsgemäße Beschichtung ausschließlich aus einer Basislackschicht (B) besteht. Abgesehen von der Schicht (B) ist also keine andere Schicht auf dem Substrat angeordnet. Trotzdem ist es natürlich möglich, dass vor dem Aufbringen des erfindungsgemäßen Basislacks (b) oder danach noch andere Beschichtungsmittel wie Füller oder Haftprimer (vorher) oder Klarlacke (nachher) aufgebracht werden. Da aber sowohl die Haftung als auch die mechanische Stabilität des Einschicht-Aufbaus, hergestellt durch Aufbringen und Härtung erfindungsgemäßen Basislacks, sehr gut ist und auf diese Weise eine enormen Vereinfachung des Verfahrens resultiert, ist der Einschicht-Aufbau bevorzugt.

### Der erfindungsgemäße Basislack

Der erfindungsgemäße Basislack enthält in der Stammlackkomponente mindestens ein spezielles Polyurethanharz (1).

Für die bei der Herstellung der Polyurethanharze (1) einsetzbaren Ausgangskomponenten und die zugrunde liegenden Umsetzungsreaktionen gilt grundsätzlich das dem Fachmann in diesem Zusammenhang Bekannte. Die Harze sind also beispielsweise herstellbar durch an sich bekannte Polyaddition von Polyisocyanaten mit Polyolen sowie Polyaminen.

Als Polyisocyanate kommen die bekannten aliphatischen, cycloaliphatischen, aliphatischcycloaliphatischen, aromatischen, aliphatisch-aromatischen und/oder cycloaliphatischaromatischen Polyisocyanate, beispielsweise die weiter unten genannten Polyisocyanate (4a), in Betracht.

Beispiele geeigneter Polyole sind gesättigte oder olefinisch ungesättigte Polyesterpolyole und/oder Polyetherpolyole. Insbesondere werden als Polyole Polyesterpolyole eingesetzt. Solche Polyesterpolyole, bevorzugt Polyesterdiole, können auf bekannte Weise durch Umsetzung von entsprechenden Polycarbonsäuren und/oder deren Anhydriden mit entsprechenden Polyolen durch Veresterung hergestellt werden. Natürlich können gegebenenfalls zusätzlich auch anteilig Monocarbonsäuren und/oder Monoalkohole zur Herstellung eingesetzt werden. Die Polyesterdiole sind bevorzugt gesättigt, insbesondere gesättigt und linear.

Beispiele für geeignete aromatische Polycarbonsäuren zur Herstellung solcher Polyesterpolyole sind Phthalsäure, Isophthalsäure und Terephthalsäure, von denen Isophthalsäure vorteilhaft ist und deshalb bevorzugt verwendet wird. Beispiele für geeignete aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure und Dodecandicarbonsäure oder auch Hexahydrophthalsäure, 1,3-Cyclohexandicarbonsäure, 1,4-Cyclohexandicarbonsäure, 4-Methylhexahydrophthalsäure, Tricyclodecandicarbonsäure sowie Tetrahydrophthalsäure. Ebenfalls eingesetzt werden können Dimerfettsäuren beziehungsweise dimerisierte Fettsäuren, bei denen es sich bekanntermaßen um Gemische handelt, die durch Dimerisierung von ungesättigten Fettsäuren hergestellt werden und beispielsweise unter den Handelsbezeichnungen Radiacid (Firma Oleon) oder Pripol (Firma Croda) zu erhalten sind. Der Einsatz solcher Dimerfettsäuren zur Herstellung von Polyesterdiolen ist im Rahmen der vorliegenden Erfindung bevorzugt. Bevorzugt eingesetzte Polyole zur Herstellung der Polyurethanharze (1) sind also Polyesterdiole, die unter Einsatz von Dimerfettsäuren hergestellt wurden. Insbesondere bevorzugt sind Polyesterdiole, bei deren Herstellung mindestens 50 Gew.-%, bevorzugt 55 bis 85 Gew.-%, der eingesetzten Dicarbonsäuren Dimerfettsäuren sind.
Nochmals bevorzugter sind Polyurethanharze (1), bei deren Herstellung der eingesetzte Anteil solcher Polyesterdiole zwischen 30 und 80 Gew.-%, bevorzugter zwischen 40 und 70 Gew.-%, jeweils bezogen auf die Gesamtmenge der zur Herstellung des Polyurethanharzes eingesetzten Ausgangsverbindungen, beträgt.

Beispiele für entsprechende Polyole zur Herstellung von Polyesterpolyolen, bevorzugt Polyesterdiolen, sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol und Trimethylpentandiol. Bevorzugt werden also Diole eingesetzt. Solche Polyole beziehungsweise Diole können natürlich auch direkt zur Herstellung der Polyurethanharze (1) eingesetzt werden, das heißt direkt mit Polyisocyanaten umgesetzt werden.

Weiterhin zur Herstellung der Polyurethanharze (1) eingesetzt werden können auch Polyamine wie Diamine und/oder Aminoakohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt. Entsprechende Polyurethanharze enthalten dann also auch Harnstoffbindungen. Solche Harze werden jedoch allgemein und auch im Rahmen der vorliegenden Erfindung als Polyurethanharze bezeichnet.

Bevorzugt wird zur Herstellung der Polyurethanharze (1) noch ein Polyol mit mehr als zwei Hydroxylgruppen eingesetzt. Dadurch erhält das Polyurethanharz (1) Verzweigungsstellen. Bevorzugt sind die Polyurethanharze (1) also verzweigt. Geeignete höherfunktionelle Alkohole (OH-Funktionalität größer 2) sind beispielsweise Trimethylolpropan, Glycerin und Pentaerythrit, bevorzugt Trimethylolpropan. Bevorzugt sind Polyurethanharze (1), bei deren Herstellung der eingesetzte Anteil solcher höherfunktionellen Alkohole, insbesondere von Trimethylolpropan, zwischen 1 und 6 Gew.-%, bevorzugter zwischen 2 und 5 Gew.-%, jeweils bezogen auf die Gesamtmenge der zur Herstellung des Polyurethanharzes eingesetzten Ausgangsverbindungen, beträgt.

Die Polyurethanharze (1) sind hydroxyfunktionell und besitzen eine Hydroxylzahl von 15 bis 100 mg KOH/g, bevorzugt 20 bis 40 mg KOH/g (gemessen nach DIN 53240). Auf diese Weise kann das Polyurethanharz (2) mit den Isocyanatgruppen des weiter unten beschriebenen hydrophil modifizierten Polyisocyanats (4) Vernetzungsreaktionen eingehen und zur thermischen Härtung beitragen.

Zudem sind die Polyurethanharze (1) carboxyfunktionell und besitzen eine Säurezahl von 10 bis 50 mg KOH/g, bevorzugt 15 bis 35 mg KOH/g (gemessen nach DIN EN ISO 3682). Auf diese Weise wird das Polyurethanharz (1) in Wasser löslich beziehungsweise dispergierbar. Wie dem Fachmann bekannt ist, bedeutet dies, dass die Polymere in zumindest anteilig wässrigen Medien nicht als unlösliche Agglomerate ausfallen, sondern eine Lösung beziehungsweise fein verteilte Dispersion ausbilden. Bekanntermaßen ist hierzu in der Regel die Einbringung von potentiell ionischen Gruppen, beispielsweise potentiell anionischen Gruppen, bevorzugt Carboxylgruppen, von Vorteil oder sogar notwendig. Solche Gruppen werden insbesondere durch entsprechende bei der Herstellung eingesetzte Monomere ins Polymer eingebracht, wobei dann das fertige Polymer diese Gruppen enthält. Demzufolge werden bei der Herstellung der Polyurethanharze (1) bevorzugt Monomere eingesetzt werden, die neben bei der Herstellung von Urethanbindungen umzusetzenden Gruppen, bevorzugt Hydroxylgruppen, noch Carbonsäuregruppen enthalten. Auf diese Weise werden die entsprechenden Gruppen ins Präpolymer eingeführt. In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders bevorzugt sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Zum Erhalt einer nochmals besseren Wasserdispergierbarkeit können die Carboxylgruppen durch gezielte Neutralisation zumindest anteilig in Carboxylatgruppen überführt werden. Dies bedeutet also, dass diese Gruppen beispielsweise bei und/oder nach der Herstellung der Polyurethanharze (1) mit Neutralisationsmitteln, bevorzugt Ammoniak, Aminen und/oder insbesondere Aminoalkoholen neutralisiert werden. Beispielsweise werden Di- und Triethylamin, Dimethylaminoethanol, Diisopropanolamin, Morpholine und/oder N-Alkylmorpholine zur Neutralisierung eingesetzt.

Die Angabe "in Wasser löslich oder dispergierbar" bedeutet nicht, dass das jeweilige Polyurethanharz (1) auch in wässriger Phase hergestellt werden muss beziehungsweise als in wässriger Dispersion vorliegend im Basislack (b) eingesetzt werden muss. Das Polymer kann beispielsweise auch in organischen Lösemitteln hergestellt werden beziehungsweise als Dispersion in organischen Lösemitteln käuflich erworben werden und auf diese Weise in dem erfindungsgemäßen Basislack eingesetzt werden. Bei der anschließenden Vermischung mit den weiteren Bestandteilen des Basislacks wird dann auch Wasser hinzugefügt. Bevorzugt ist, dass das Polyurethanharz (1) in organischen Lösemitteln wie beispielsweise Methylethylketon, Butylglykol und/oder weiteren bekannten organischen Lösemitteln hergestellt wird.

Geeignete Polyurethanharze (1) weisen beispielsweise ein zahlenmittleres Molekulargewicht von 500 bis 20000 g/mol auf. Das gewichtsmittlere Molekulargewicht liegt beispielsweise im Bereich von 5000 bis 50000 g/mol. Die Bestimmung der Molekulargewichte erfolgt im Rahmen der vorliegenden Erfindung mittels GPC-Analyse mit THF (+0,1% Essigsäure) als Eluent (1 ml/min) auf einer Styrol-Divinylbenzol-Säulenkombination. Die Kalibrierung wird mit Polystyrol-Standards durchgeführt.

Der Anteil des mindestens einen Polyurethanharzes (1) kann beispielsweise im Bereich von 0,5 bis 5 Gew.-%, bevorzugt 0,75 bis 4,0 Gew.-%, besonders bevorzugt 1,0 bis 3,0 Gew.-%, jeweils bezogen auf das Gesamtgewicht des erfindungsgemäßen Basislacks, liegen.

Der erfindungsgemäße Basislack (b) enthält in der Stammlackkomponente (b.1) mindestens eine spezielle wässrige Dispersion (2).

Die wässrige Dispersion (2) enthält jedenfalls Wasser und einen Polyurethanharz-Anteil, wobei dieser Polyurethanharz-Anteil aus mindestens einem Polyurethanharz besteht. Der Polyurethanharz-Anteil ist natürlich von dem oben beschriebenen Polyurethanharz (1) verschieden.

Polyurethanharze, deren Herstellung und einsetzbare Ausgangsprodukte sind bekannt und auch weiter oben bei der Beschreibung der Polyurethanharze (1) erläutert. Im Hinblick auf die erfindungsgemäß einzusetzende Dispersion (2) beziehungsweise den Polyurethanharz-Anteil und die diesen Anteil ausmachenden Polyurethanharze gelten jedoch spezielle, in der Folge erläuterte Bedingungen.

Der Polyurethanharz-Anteil besitzt einen Gelanteil von mindestens 50 % (Messmethode siehe Beispielteil).

Bei den erfindungsgemäß einzusetzenden Dispersionen (2) handelt es sich also um Mikrogel-Dispersionen. Eine Mikrogel-Dispersion ist bekanntermaßen zunächst eine Polymer-Dispersion, das heißt eine Dispersion, in der mindestens ein Polymer als dispergiertes Medium in Form von Partikeln beziehungsweise Polymer-Partikeln vorhanden ist. Die Polymer-Partikel sind zumindest teilweise intramolekular vernetzt. Letzteres bedeutet, dass die innerhalb eines Partikels vorhandenen Polymerstrukturen zumindest teilweise einem typischen makroskopischen Netzwerk mit dreidimensionaler Netzwerkstruktur gleichen. Makroskopisch betrachtet handelt es sich bei einer solchen Mikrogel-Dispersion aber nach wie vor um eine Dispersion von Polymer-Partikeln in einem Dispersionsmedium, vorliegend insbesondere Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare Teilchengröße aufweisen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dieser unlösliche Anteil entspricht wiederum dem Anteil des in der Dispersion in Form von intramolekular vernetzen Partikeln beziehungsweise Partikelanteilen vorliegenden Polymers.

Der in der Dispersion (2) enthaltene Polyurethanharz-Anteil besitzt vorzugsweise einen Gelanteil von mindestens 55 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethanharz, welches den Polyurethanharz-Anteil ausmacht, in Form von vernetzten Partikeln vor. Es ist aber ausreichend, wenn zumindest die Hälfte des Polyurethanharz-Anteils in Form vernetzter Partikel vorliegt.

Der Polyurethanharz-Anteil hat seinen Glasübergang bei einer Temperatur von kleiner -20°C und seinen Schmelzübergang bei einer Temperatur von kleiner 100°C (Messmethode siehe Beispielteil).

Dies bedeutet damit unmittelbar, dass der Polyurethanharz-Anteil jedenfalls teilkristallinen Charakter hat. Denn bekanntermaßen bedeutet ein Glasübergang immer, dass ein amorpher Festkörper (glasartig, nicht kristallin) erweicht, während ein Schmelzübergang bedeutet, dass ein kristallines System schmilzt, das heißt zuvor vorhandene kristalline Strukturen danach nicht mehr vorhanden sind. Ideal-theoretisch betrachtete rein amorphe Polymere beziehungsweise Harze weisen also lediglich einen Glasübergang, jedoch keinen Schmelzübergang auf (beziehungsweise ist ein solcher im realen System messtechnisch nicht auflösbar). Ideal-theoretisch betrachtete hoch- beziehungsweise reinkristalline Polymere weisen lediglich Schmelzübergänge auf, besitzen jedoch keinen Glasübergang (beziehungsweise er ist im realen System messtechnisch nicht auflösbar). Ein System, in denen beide Charakteristika, das heißt amorphe und kristalline Eigenschaften, eindeutig vorhanden sind, weist damit sowohl einen Glasübergang als auch einen Schmelzübergang auf. Das System hat also sowohl amorphe, als auch kristalline Domänen (teilkristallin). Naturgemäß läuft der Schmelzübergang immer bei höheren Temperaturen, als der Glasübergang ab.

Die Formulierung, dass der Polyurethanharz-Anteil bei einer Temperatur von kleiner -20°C seinen Glasübergang hat, bedeutet also, dass ab der entsprechenden Temperatur keine glasartige Struktur (keine amorphe Festkörperstruktur) mehr im Polyurethanharz-Anteil vorhanden ist. Der Glasübergang kann messtechnisch nachvollzogen werden (näheres siehe Beispielteil).

Die Formulierung, dass der Polyurethanharz-Anteil bei einer Temperatur von kleiner 100°C seinen Schmelzübergang hat, bedeutet also, dass ab der entsprechenden Temperatur keine Kristallite mehr vorhanden sind. Selbstverständlich ist das System aber auch vor Erreichen der entsprechenden Temperatur und oberhalb der Glasübergangstemperatur bereits anteilig erweicht. Denn genau eine solche anteilige Erweichung des amorphen Anteils geschieht beim Glasübergang. Der Schmelzübergang kann ebenfalls messtechnisch nachvollzogen werden (näheres siehe Beispielteil). In jedem Fall aber erfolgt der Schmelzübergang unterhalb einer Temperatur von 100°C.

Entsprechend kann der Polyurethanharz-Anteil Polyurethanharze enthalten, die teilkristallin sind und/oder er enthält sowohl hochkristalline als auch amorphe Polyurethanharze.

Der Polyurethanharz-Anteil hat seinen Glasübergang bei einer Temperatur von kleiner -20°C. Vorzugsweise liegt der Glasübergang im Bereich von -100°C bis kleiner -20°C, nochmals bevorzugt -90°C bis -40°C.

Der Polyurethanharz-Anteil hat seinen Schmelzübergang bei einer Temperatur von kleiner 100°C. Bevorzugt liegt der Schmelzübergang bei einer Temperatur im Bereich von -20°C bis kleiner 90°C, nochmals bevorzugt -15°C bis kleiner 80°C.

Die einzusetzende Komponente (2) ist eine wässrige Dispersion, das heißt sie enthält ein Dispersionsmedium, vorliegend insbesondere Wasser, und darin dispergierte Partikel, nämlich Polymer-Partikel. Demzufolge sind der Polyurethanharz-Anteil beziehungsweise die diesen Anteil ausmachenden Polyurethanharze in Form von Polymer-Partikeln in dem Dispersionsmedium dispergiert. Die Partikelgröße der Polyurethanharz-Partikel liegt beispielsweise innerhalb der gängigen Bereiche für Polymerdispersionen. Bevorzugt ist aber, dass der Polyurethanharz-Anteil jedenfalls, aber nicht zwingend ausschließlich, Partikel mit einer Teilchengröße von größer 1 Mikrometer enthält. Bevorzugte Bereiche hierbei sind von 1 bis 100 Mikrometern. Unter der Partikelgröße ist an dieser Stelle keine mittlere Teilchengröße aller Partikel in der Dispersion zu verstehen. Diese Angabe wäre insbesondere für den Fall, dass sich der Polyurethanharz-Anteil aus unterschiedlichen Polyurethanharzen und/oder Polyurethanpartikeln, die keine monomodale Verteilung aufweisen, sondern eine multimodale, beispielsweise bimodale, Verteilung aufweisen, zusammensetzt, nicht praktikabel. Es geht vielmehr darum, dass die Dispersion grundsätzlich Partikel enthält, die im entsprechenden Größenbereich liegen. Einer messtechnisch erhaltenen Teilchengrößenverteilung (Verteilungskurve, Volumendichte), die also monomodal oder multimodal, beispielsweise bimodal, sein kann, ist dann zu entnehmen, dass die Dispersion Partikel im angegebenen Bereich enthält. Die Verteilungskurven (Volumendichte) können mit Laserbeugung ermittelt werden, durch welche Größenverteilungen im entsprechenden Bereich optimal erfasst werden können. Gemessen wurde im Rahmen der vorliegenden Erfindung mit einem Partikelgrößenmessgerät vom Typ "Mastersizer 3000" (Fa. Malvern Instruments). Zur Einstellung des für die Messung geeigneten Konzentrationsbereichs wurde die Probe mit partikelfreiem, deionisierten Wasser als Dispergiermedium (Brechungsindex: 1,33) verdünnt, die Lichtabschattung probenabhängig zwischen 3% und 15% eingestellt und in der Dispergiereinheit "Hydro 2000G" (Fa. Malvern Instruments) vermessen. Gemessen wurde bei einer Rührgeschwindigkeit von 3000 1/min, wobei bei dieser Geschwindigkeit vor der Messung für 5 Minuten äquilibriert wurde. Die Berechnung der volumengewichteten Größenverteilung erfolgte mit der Malvern Instruments Software (Version 5.60) mittels Fraunhofer Näherung.

Bevorzugt ist, dass die Dispersion (2), bezogen auf das Gesamtgewicht des Polyurethanharz-Anteils, mindestens 10 Gew.-%, bevorzugt mindestens 20 Gew.-%, nochmals bevorzugt mindestens 30 Gew.-% und ganz besonders bevorzugt mindestens 50 Gew.-% an Polyurethanharz-Partikeln mit einer Teilchengröße von größer 1 Mikrometer, bevorzugt 1 bis 100 Mikrometer, enthält. Der aus mindestens einem Polyurethanharz bestehende Polyurethanharz-Anteil, welcher in Form von dispergierten Partikeln vorliegt, enthält also mindestens 10 Gew.-% (beziehungsweise mindestens 20 Gew.-%, 30 Gew.-%, 50 Gew.-%) von Partikeln mit entsprechenden Teilchengrößen.

Der Polyurethanharz-Anteil der Dispersion (2) ist bevorzugt nicht thermisch-chemisch härtbar mit Isocyanatgruppen-haltigen Komponenten, beispielsweise einem hydrophil modifizierten Polyisocyanat (4). Dies bedeutet, dass durch das Zusammengeben der entsprechenden Polyurethanharze der Dispersion (2) mit einer Isocyanatgruppen-haltigen Komponente keine typische thermisch-chemisch gehärtete Beschichtung gebildet werden kann. Demzufolge besitzt das mindestens eine Polyurethanharz des Polyurethanharz-Anteils bevorzugt keine oder nur eine untergeordnete Menge an funktionellen Gruppen, die mit Isocyanatgruppen Vernetzungsreaktionen unter wie weiter oben beschriebenen Vernetzungsbedingungen eingehen können. Unter untergeordneten Mengen ist zu verstehen, dass die entsprechenden Gruppen bei der Herstellung nicht beabsichtigt in merkbaren Mengen in die Polymere eingebaut werden, sondern beispielsweise aus rein statistischen Gründen bei der realen Umsetzung entsprechender Ausgangsprodukte nicht vollständig umgesetzt werden und dann im Polymer verbleiben. So können Hydroxylgruppen und Aminogruppen bei Einsatz entsprechender Ausgangsprodukte bei der Herstellung von Polyurethanen natürlich auch dann im erhaltenen Polymer vorhanden sein, wenn diese Gruppen in äquimolaren oder sogar untergeordneten molaren Mengen im Vergleich zu den ebenfalls einzusetzenden Polyisocyanaten eingesetzt werden. Dies bedingen rein synthesetechnische Gründe. Ein beabsichtigter Einbau solcher Gruppen, insbesondere durch den Einsatz eines signifikanten molaren Überschusses entsprechender Gruppen bei der Herstellung von Polyurethanen, erfolgt aber bevorzugt nicht. Demzufolge sind die Mengen an noch vorhandenen funktionellen Gruppen, die mit Isocyanatgruppen Vernetzungsreaktionen unter wie oben beschriebenen Vernetzungsbedingungen eingehen können, insbesondere Hydroxyl- und Aminogruppen, bevorzugt nicht ausreichend, um durch Einsatz dieser Polyurethanharze eine typische thermisch-chemisch gehärtete Beschichtung zu bilden.

Aus oben Gesagtem folgt, dass die Hydroxylzahl (Messmethode siehe oben) und die Aminzahl (gemessen nach DIN 53176) des Polyurethanharz-Anteils bevorzugt bei kleiner 20, insbesondere bevorzugt bei kleiner 10 liegen.

Bevorzugt werden bei der Herstellung der den Polyurethanharz-Anteil ausmachenden Polyurethanharze die Mengen der Ausgangsprodukte zur Herstellung so gewählt, dass das Verhältnis der molaren Gesamtmenge an Isocyanatgruppen und der molaren Gesamtmenge von funktionellen Gruppen, die mit Isocyanatgruppen Vernetzungsreaktionen eingehen können, insbesondere Hydroxyl- und Aminogruppen, bei größer 0,9 liegt. Nochmals bevorzugt ist das genannte Verhältnis größer 0,95, insbesondere mindestens 1,0, ganz besonders bevorzugt genau 1,0.
Der Polyurethanharz-Anteil enthält bevorzugt potentiell ionische Gruppen, beispielsweise potentiell anionischen Gruppen, bevorzugt Carbonsäure- oder Sulfonsäuregruppen, insbesondere Carbonsäuregruppen. Wie schon oben bei der Beschreibung des Polyurethanharzes (1) beschrieben, sind solche Gruppen bei der Bildung einer wässrigen Dispersion von Vorteil. Demzufolge werden bei der Herstellung der den Polyurethanharz-Anteil ausmachenden Polyurethanharze bevorzugt Monomere eingesetzt werden, die neben bei der Herstellung von Urethanbindungen umzusetzenden Gruppen, bevorzugt Hydroxylgruppen und/oder Aminogruppen, noch Carbonsäure- oder Sulfonsäuregruppen enthalten. Auf diese Weise werden die entsprechenden Gruppen ins Präpolymer eingeführt. In diesem Sinne bevorzugte Verbindungen sind beispielsweise Monocarbonsäuren enthaltend zwei Hydroxylgruppen oder zwei Aminogruppen wie beispielsweise Dihydroxypropionsäure, Dihydroxybernsteinsäure und Dihydroxybenzoesäure sowie N-(2-Aminoethyl)-2-aminoethancarbonsäure und N-(2-Aminoethyl)-2-aminoethansulfonsäure. Ganz besonders bevorzugt sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure sowie die N-(2-Aminoethyl)-2-aminoethancarbonsäure. Eine gezielte, zumindest anteilige Neutralisierung der genannten Gruppen über schon oben genannte Neutralisationsmittel ist natürlich ebenfalls möglich.

Die Dispersion (2) ist wässrig. Der Ausdruck "wässrig" im Zusammenhang mit wässrigen Polymerdispersionen ist bekannt. Eine solche Dispersion enthält als Dispersionsmedium insbesondere Wasser. Die Hauptbestandteile der Dispersion (2) sind also Wasser und der Polyurethanharz-Anteil. Selbstverständlich kann die Dispersion (2) aber zusätzlich auch noch weitere Bestandteile enthalten. Zu nennen sind beispielsweise organische Lösemittel und/oder typische Hilfsstoffe wie Emulgatoren und Schutzkolloiden. Ebenfalls enthalten sein können beispielsweise anorganische Komponenten wie Pigmente oder auch Silikate oder Polykieselsäuren, wobei letztere beispielsweise zum Mattierungseffekt der letztlich herzustellenden Mehrschichtbeschichtung beitragen können.

Der Anteil des Polyurethanharz-Anteils in der Dispersion (2) beträgt 15 bis 60 Gew.-%, bevorzugt 20 bis 50 Gew.-%, jeweils bezogen auf die Gesamtmenge der Dispersion (2).

Der Anteil von Wasser in der Dispersion (2) beträgt bevorzugt 40 bis 85 Gew.-%, bevorzugt 50 bis 80 Gew.-%, jeweils bezogen auf die Gesamtmenge der Dispersion.

Die Summe aus dem Anteil des Polyurethanharz-Anteils und dem Anteil von Wasser an der Dispersion liegt bevorzugt bei mindestens 75 Gew.-%, bevorzugt bei mindestens 85 Gew.-%.

Die Herstellung der beschriebenen Dispersionen (2) kann auf dem Fachmann bekannten Methoden erfolgen, beispielsweise durch Umsetzung entsprechender Ausgangskomponenten in organischen Lösemitteln zur Herstellung von Polyurethanharzen und anschließende Dispergierung in wässriger Phase sowie Entfernung von organischen Lösemitteln. Entsprechende Dispersionen sind beispielsweise auch im Handel erhältlich, beispielsweise unter dem Handelsnamen Astacin Novomatt (Fa. BASF).

Der Anteil der mindestens einen wässrigen Dispersion (2) kann beispielsweise im Bereich von 20 bis 75 Gew.-%, bevorzugt 30 bis 70 Gew.-%, besonders bevorzugt 40 bis 65 Gew.-%, jeweils bezogen auf das Gesamtgewicht des erfindungsgemäßen Basislacks, liegen.

Der erfindungsgemäße Basislack enthält in der Stammlackkomponente (b.1) mindestens ein farb- und/oder effektgebendes Pigment (3). Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Aber auch organische Pigmente wie Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz können eingesetzt werden.

Der Anteil des mindestens einen Pigments (3) kann beispielsweise im Bereich von 1 bis 25 Gew.-%, bevorzugt 3 bis 20 Gew.-%, besonders bevorzugt 5 bis 15 Gew.-%, jeweils bezogen auf das Gesamtgewicht des erfindungsgemäßen Basislacks, liegen.

Es ist erfindungswesentlich, dass im Basislack (b) mindestens ein Pigment (3) in Form mindestens einer Pigmentpaste eingesetzt, wobei die Paste als Pastenharz mindestens ein Polyurethanharz (1) enthält. Das Pigment (3) wird also nicht direkt der Stammlackkomponente hinzugefügt, sondern es wird in Form einer Pigmentpaste eingesetzt.

Eine Pigmentpaste oder Pigmentpräparation ist bekanntermaßen eine Zubereitung von Pigmenten oder Pigmentmischungen in Trägermaterialien, in denen die Pigmente in der Regel eine deutlich höhere Konzentration aufweisen, als in der späteren Anwendung, hier also dem Basislack (b). Als Trägermaterialien dienen meist Harze (dann genannt Pastenharze) und/oder Lösemittel wie organische Lösemittel und/oder Wasser. Solche Pasten werden in der Regel verwendet, um hierdurch die Verarbeitbarkeit der Pigmente zu verbessern (staubfreie Verarbeitung) und/oder durch entsprechende Feinverteilung und Benetzung der Pigmente den Verteilungszustand der Pigmente im Lack zu optimieren. Hierdurch resultiert dann natürlich auch eine verbesserte optische Qualität der unter Einsatz des Lacks hergestellten Beschichtung.

Im Rahmen der vorliegenden Erfindung wurde überraschenderweise festgestellt, dass gerade durch den Einsatz einer Paste, die neben mindestens einem Pigment zudem mindestens ein Polyurethanharz (1) enthält, Beschichtungen resultieren, die eine sehr hohe mechanische Beständigkeit aufweisen. Insbesondere ist die die Abrieb- und Steinschlagbeständigkeit sehr gut. Dies ist auch dann der Fall, wenn die Beschichtung keine oberhalb der Basislackschicht (B) angeordnete schützende Schicht wie eine Klarlackschicht umfasst. Die Basislackschicht (B) kann also direkt als oberste und/oder einzige Beschichtungsschicht vorhanden sein. Trotzdem wird eine wie beschrieben gute mechanische Beständigkeit erreicht.

Die Pigmentpasten enthalten bevorzugt 1 bis 60 Gew.-% mindestens eines Pigments, 10 bis 60 Gew.-% mindestens eines Polyurethanharzes (1) sowie 30 bis 80 Gew.-% mindestens eines organischen Lösemittels, wobei die angegebenen Anteile sich auf die Gesamtmenge der Paste beziehen und zusammen mindestens 80 Gew.-%, bevorzugt mindestens 90 Gew.-% des Gesamtgewichts der Paste ausmachen. Der Gehalt an Pigmenten richtet sich dabei beispielsweise nach der Deckkraft oder auch der Benetzbarkeit des Pigments. Weitere Anteile einer solchen Paste können beispielsweise Additive wie Benetzungsmittel sein.

Bevorzugt werden alle Pigmente, die in dem Basislack (b) enthalten sind, in Form von solchen Pigmentpasten eingesetzt.

Bereits weiter oben sind bevorzugte Anteilsbereiche von Polyurethanharzen (1) und Pigmenten (3) genannt. Die Art und Menge der Pigmentpasten ist somit auch auf die Art und Menge von Polyurethanharzen (1) und Pigmenten (3), die im erfindungsgemäßen Basislack (b) eingesetzt werden sollen, abzustimmen.

Der erfindungsgemäße Basislack enthält in der Härterkomponente (b.2) mindestens ein hydrophil modifiziertes Polyisocyanat (4) mit einem Isocyanatgehalt von 8 bis 18 %.

Die hydrophil modifizierten Polyisocyanate (4) können durch Modifizierung von dem Fachmann an sich bekannten Polyisocyanaten (4a), das heißt organischen Polyisocyanaten (4a), hergestellt werden. Es handelt sich dabei um die bekannten aliphatischen und aromatischen Komponenten, die im Mittel mehr als eine Isocyanatgruppe pro Molekül enthalten. Es können die an sich bekannten Polyisocyanate (4a) wie aliphatische und aromatische Polyisocyanate, insbesondere Diisocyanate und deren Dimere und Trimere wie Uretdione und Isocyanurate eingesetzt werden. Als Polyisocyanate (4a) können beispielsweise Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, deren Dimere und Trimere, sowie Mischungen aus diesen Polyisocyanaten eingesetzt werden.

Bevorzugte Polyisocyanate (4a) sind die bekannten Dimeren und/oder Trimeren der zuvor genannten Diisocyanate, das heißt also insbesondere die an sich bekannten Uretdione und Isocyanurate der zuvor genannten Diisocyanate. Nochmals bevorzugt sind Isocyanurate, bevorzugt Isocyanurate von Hexamethylen-1,6-diisocyanat (HDI).

Bekanntermaßen lassen sich solche Isocyanurate bei Anwesenheit bestimmter Katalysatoren, beispielsweise Natriumformiat, Kaliumacetat, tertiären Aminen oder Triphenylphosphinen, aus verschiedensten Isocyanaten herstellen. Dabei bilden sich die sehr stabilen, selbst bei hohen Temperaturen von beispielsweise über 100°C beständigen Isocyanuratringsysteme, gebildet aus jeweils drei Isocyanatgruppen. Jede der drei Isocyanatgruppen stammt dabei von drei verschiedenen Molekülen des jeweils eingesetzten Isocyanats, das heißt es bilden sich trimere Strukturen. Während beim Einsatz von Monoisocyanaten in jedem Fall Moleküle entstehen, die anhand der jeweiligen chemischen Strukturformel eindeutig definiert sind, muss die Reaktion bei Polyisocyanaten, beispielsweise Diisocyanaten wie HDI, nicht so einheitlich verlaufen und führt insbesondere zu höhervernetzten, so genannten Isocyanurat-Polyisocyanaten (beispielsweise Isocyanurat-Diisocyanaten) beziehungsweise Mischungen verschiedener Isocyanurat-Polyisocyanate. Es handelt sich dabei also um Isocyanurate mit teils polymerem Charakter, die auf einem Polyisocyanat, beispielsweise einem Diisocyanat, basieren. Je nach Wahl der an sich bekannten Reaktionsbedingungen und Reaktionsführung bedeutet dies beispielsweise, dass sich an ein bereits gebildetes Isocyanurat-Trimer weitere Diisocyanate anlagern können und weitere Isocyanuratringsysteme entstehen können, wobei dann verschiedene Produkte mit höheren Molekulargewichten entstehen. Gleichzeitig verringert sich dabei die mittlere Anzahl von Isocyanatgruppen, bezogen auf ein monomeres Diisocyanat. Während diese Anzahl im idealen Trimer, bestehend aus genau drei Diisocyanatmolekülen, genau 1 beträgt, sinkt diese Anzahl in höhervernetzten Isocyanurat-Polyisocyanaten auf kleiner 1. Bekanntermaßen möglich ist zudem, dass beispielsweise zur Reaktivitätsanpassung der Isocyanurate bei deren Herstellung noch Anteile von verbrückenden Diolen, beispielsweise Hexandiol, zugegeben werden können und auf diese Weise mehrere Isocyanuratringsysteme miteinander verbunden werden können.

Bekanntermaßen wird die Menge von Isocyanatgruppen in Polyisocyanaten, beispielsweise in Isocyanuraten von Diisocyanaten in der Regel über den Isocyanatgehalt angegeben. Der Isocyanatgehalt ist der Massenanteil der freien Isocyanatgruppen in Polyisocyanaten, ausgedrückt in Prozent. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Geht man von einem bestimmten Diisocyanat, beispielsweise HDI, aus und stellt aus diesem Diisocyanat dann nach den an sich bekannten und bereits oben erläuterten Methoden Isocyanurate auf Basis des Diisocyanats her, insbesondere solche mit polymerem Charakter, so spiegelt der Isocyanatgehalt den Vernetzungsgrad des jeweiligen Isocyanurats beziehungsweise Isocyanurat-Diisocyanats wider. Aus dem oben beschriebenen folgt unmittelbar: Je niedriger der Isocyanatgehalt, desto höher die Vernetzungsdichte. So nimmt beispielsweise der theoretische Isocyanatgehalt des rein trimeren Isocyanurats auf Basis von HDI den Maximalwert von etwa 25 % ein (Molekulargewicht 3x NCO = 126 g/mol; Molekulargewicht des rein trimeren Isocyanurats aus HDI = 504,6 g/mol).

Die Polyisocyanate (4) sind hydrophil modifiziert, werden also insbesondere durch hydrophile Modifizierung von wie oben beschriebenen Polyisocyanaten (4a), bevorzugt Isocyanuraten von HDI, hergestellt.

Dies bedeutet, dass die Polyisocyanate (4) solche Gruppen enthalten, die im Vergleich zu Gruppen und Moleküleinheiten, welche in gängigen Polyisocyanaten, wie insbesondere den oben beschriebenen Polyisocyanaten (4a), enthalten sind, hydrophiler sind. Demnach sind die Gruppen also jedenfalls hydrophiler als reine Kohlenwasserstoffgruppen beziehungsweise -anteile. Bevorzugte Gruppen sind Polyethergruppen und Polyestergruppen. Bevorzugte Polyisocyanate (4) sind also polyether- und/oder polyestermodifizierte Polyisocyanate. Ganz besonders bevorzugt sind polyethermodifizierte Polyisocyanate.

Ein polyethermodifiziertes Polyisocyanat (4) enthält also Polyethergruppen wie Polyetherketten, insbesondere bevorzugt Polyoxyalkylenketten. Nochmals bevorzugte Polyethergruppen sind Polyoxyethylen-, Polyoxypropylen- und/oder gemischte Polyoxyethylen-Polyoxypropylengruppen beziehungsweise -ketten. Als Polyethermodifizierung von Polyisocyanaten wird im Rahmen der vorliegenden Erfindung insbesondere eine Modifizierung mit Alkoxypolyoxyalkylengruppen, bevorzugt Methoxypolyoxyalkylengruppen, bezeichnet. Ganz besonders bevorzugt handelt es sich dabei um Methoxypolyoxyethylengruppen, Methoxypolyoxypropylengruppen und/oder gemischte Methoxy-Polyoxyethylen-Polyoxypropylengruppen.

Zur Einführung der hydrophilen Modifizierungen können beispielsweise die dem Fachmann bekannten und auch im Handel erhältlichen Alkoxypoly(oxyalkylen)alkohole eingesetzt werden. Dabei erfolgt dann eine anteilige Umsetzung der Isocyanatgruppen in dem Polyisocyanat (4a) mit den polymeren Monoalkoholen, wodurch die Polyethermodifizierungen, das heißt beispielsweise die Poly(oxyalkylen)-Gruppen, durch Ausbildung von Urethanbrücken kovalent an das Polyisocyanat (4a) angebunden werden und ein hydrophil modifiziertes Polyisocyanat (4) entsteht.

Entsprechendes gilt für polyestermodifizierte Polyisocyanate (4). Bevorzugt sind aliphatische, lineare Polyestergruppen, insbesondere bevorzugt Polylactongruppen, nochmals bevorzugt Polycaprolactongruppen. Polycaprolactone und deren Herstellung, beispielsweise durch Umsetzung eines Monoalkohols mit epsilon-Caprolacton, sind bekannt. Auch sie können nach gängigen Methoden über Reaktion der mindestens einen in ihnen vorhandenen Hydroxylgruppen mit einer Isocyanatgruppe in ein Polyisocyanat (4a) eingeführt werden.

Es ist demnach ersichtlich, dass die hydrophile Modifizierung Isocyanatgruppen aus dem System entfernt und damit, bezogen auf das jeweilige Polyisocyanat ohne Modifizierung, zu einer Verringerung des Isocyanatgehalts führt. Die zugrunde liegenden Reaktionen der Modifizierung und die dabei zu wählenden Reaktionsbedingungen sind dem Fachmann bekannt und können je nach Einzelfall problemlos angepasst werden. Wichtig ist aber, dass das schließlich hergestellte Polyisocyanat (4) folgende Merkmale aufweist. Es handelt sich um ein Polyisocyanat, das heißt es muss im Mittel mehr als eine Isocyanatgruppe pro Molekül aufweisen. Es muss einen Isocyanatgehalt von 10 bis 18 % aufweisen. Es muss hydrophile Gruppen, insbesondere Poly(oxyalkylen)-Gruppen und/oder aliphatische, lineare Polyestergruppen, darunter bevorzugt Polyoxyethylen-, Polyoxypropylen- und/oder gemischte Polyoxyethylen-Polyoxypropylengruppen und/oder Polylactongruppen, enthalten.

Innerhalb dieser Vorgaben kann der Anteil von im Polyisocyanat (4) modifizierten Isocyanatgruppen breit variieren und liegt beispielsweise im Bereich von 1 - 60 mol-%, bevorzugt 2 - 55 mol-%, insbesondere bevorzugt 5 - 50 mol-%. Der angegebene molare Anteil bezieht sich dabei auf die vor der Modifizierung freien Isocyanatgruppen des Polyisocyanats (4a).

Das mindestens eine hydrophil modifizierte Polyisocyanat (4) weist bevorzugt einen Isocyanatgehalt von 9 bis 16 %, nochmals bevorzugt von 10 bis 14 % auf.

Der Anteil des mindestens einen hydrophil modifizierten Polyisocyanats (4) beträgt bevorzugt 3 bis 15 Gew.-%, insbesondere 4 bis 14 Gew.-%, ganz besonders bevorzugt 6 bis 12 Gew.-%, jeweils bezogen auf die Gesamtmenge des erfindungsgemäßen Basislacks.

Die beschriebenen hydrophil modifizierten Polyisocyanate (4) sind im Handel erhältlich und können ohne weiteres im Basislack eingesetzt werden.

Bevorzugt enthält der erfindungsgemäße Basislack (b) in der Stammkomponente noch mindestens eine weitere spezielle wässrige Dispersion (5).

Die wässrige Dispersion (5) enthält jedenfalls Wasser und einen Polyurethanharz-Anteil, wobei dieser Polyurethanharz-Anteil aus mindestens einem Polyurethanharz besteht. Der Polyurethanharz-Anteil ist natürlich von dem oben beschriebenen Polyurethanharz (1) und dem Polyurethanharz-Anteil der Dispersion (2) verschieden.

Der Polyurethanharz-Anteil der Dispersion (5) besitzt einen Gelanteil von mindestens 50 %, bevorzugt von mindestens 60 %, insbesondere bevorzugt von mindestens 75 %. Auch die Dispersion (5) ist also eine Mikrogel-Dispersion.

Der Polyurethanharz-Anteil besteht bevorzugt aus genau einem Polyurethanharz.

Die mittlere Teilchengröße (Volumenmittel) des in Form von Partikeln dispergierten Polyurethanharz-Anteils der Dispersion beträgt bevorzugt von 20 bis 500 Nanometern, nochmals bevorzugt von 40 bis 300 Nanometern. Gemessen werden kann dies in Anlehnung an DIN EN ISO 11357-1 durch Photonenkorrelationsspektroskopie (PCS) mittels eines Messgeräts "Malvern Nano S90" (Fa. Malvern Instruments) bei 25 ± 1 °C, wobei die Auswertung mittels digitalem Korrelator unter Zuhilfenahme der Auswertungssoftware Zetasizer Vers. 6.32 (Fa. Malvern Instruments) erfolgen kann und eine Überprüfung der Messwerte über Polystyrol-Standards mit zertifizierten Partikelgrößen zwischen 50 bis 3000 nm erfolgen kann.

Aus Obigem folgt, dass der Polyurethanharz-Anteil bevorzugt eine monomodale Teilchengrößenverteilung besitzt. Denn erstens besteht der Polyurethanharz-Anteil bevorzugt aus genau einem Polyurethanharz, wobei sich genau ein Polyurethanharz in der Regel in Form einer monomodalen Verteilung in einer Dispersion konstituiert. Zum zweiten lässt sich eine solche monomodale Verteilung sehr gut über eine mittlere Teilchengröße beschreiben.

Der Polyurethanharz-Anteil der Dispersion (5) hat bevorzugt seinen Glasübergang bei einer Temperatur von kleiner 0°C. Vorzugsweise liegt der Glasübergang im Bereich von -100°C bis -20°C, nochmals bevorzugt -80°C bis -30°C.

Nochmals bevorzugter ist, dass der Polyurethanharz-Anteil der Dispersion (5) keinen Schmelzübergang im Bereich von kleiner 100°C aufweist. Demzufolge hat der Polyurethanharz-Anteil also entweder gar keinen Schmelzübergang, hat also rein amorphen Charakter. Oder er besitzt (teil)kristallinen Charakter, wobei dann der Schmelzübergang bei mindestens 100°C liegt. Bevorzugt besitzt der Polyurethanharz-Anteil der Dispersion (5) gar keinen Schmelzübergang.

Auch der Polyurethanharz-Anteil der Dispersion (5) ist bevorzugt nicht thermisch-chemisch härtbar mit Isocyanatgruppen-haltigen Komponenten, beispielsweise einem hydrophil modifizierten Polyisocyanat (4). Demzufolge gilt, dass die Hydroxylzahl und die Aminzahl des Polyurethanharz-Anteils der Dispersion (5) bevorzugt bei kleiner 20, insbesondere bevorzugt bei kleiner 10 liegen.

Bevorzugt werden bei der Herstellung der den Polyurethanharz-Anteil ausmachenden Polyurethanharze der Dispersion (5) die Mengen der Ausgangsprodukte zur Herstellung so gewählt, dass das Verhältnis der molaren Gesamtmenge an Isocyanatgruppen und der molaren Gesamtmenge von funktionellen Gruppen, die mit Isocyanatgruppen Vernetzungsreaktionen eingehen können, insbesondere Hydroxyl- und Aminogruppen, bei größer 0,9 liegt. Nochmals bevorzugt ist das genannte Verhältnis größer 0,95, insbesondere mindestens 1,0, ganz besonders bevorzugt genau 1,0.

Der Polyurethanharz-Anteil der Dispersion (5) enthält bevorzugt potentiell ionische Gruppen, beispielsweise potentiell anionischen Gruppen, bevorzugt Carbonsäure- oder Sulfonsäuregruppen.

Bevorzugt werden die zugrunde liegenden Polyurethanharze wie folgt hergestellt. In organischer Lösung wird (i) ein Isocyanatgruppen-haltiges Polyurethanprepolymer hergestellt und (ii) dieses Prepolymer mit Monocarbonsäuren enthaltend zwei Aminogruppen bevor, während oder nachdem das Prepolymer in wässriger Phase dispergiert wurde, umgesetzt. Auf diese Weise werden dann auch die potentiell anionischen Gruppen ins Polymer eingebaut. Vor, während oder nach der Dispergierung kann gegebenenfalls auch eine Umsetzung mit weiteren typischen Diaminen zur Kettenverlängerung durchgeführt werden. Bevorzugt eingesetzte Monocarbonsäuren enthaltend zwei Aminogruppen sind N-(2-Aminoethyl)-2-aminoethancarbonsäure und N-(2-Aminoethyl)-2-aminoethansulfonsäure. Auf diese Weise wurden auch die in den Beispielen eingesetzten Dispersionen (5) hergestellt.

Der Anteil des Polyurethanharz-Anteils in der Dispersion (5) beträgt bevorzugt 25 bis 55 Gew.-%, bevorzugt 30 bis 50 Gew.-%, jeweils bezogen auf die Gesamtmenge der Dispersion (5).

Der Anteil von Wasser in der Dispersion (5) beträgt bevorzugt 45 bis 75 Gew.-%, bevorzugt 50 bis 70 Gew.-%, jeweils bezogen auf die Gesamtmenge der Dispersion.

Die Summe aus dem Anteil des Polyurethanharz-Anteils und dem Anteil von Wasser an der Dispersion (5) liegt bevorzugt bei mindestens 75 Gew.-%, bevorzugt bei mindestens 85 Gew.-%.

Auch solche Dispersionen (5) sind beispielsweise im Handel erhältlich, beispielsweise unter der Handelsbezeichnung Bayhydrol UH (Fa. Bayer).

Der Anteil der mindestens einen wässrigen Dispersion (5) kann beispielsweise im Bereich von 10 bis 40 Gew.-%, bevorzugt 20 bis 30 Gew.-%, jeweils bezogen auf das Gesamtgewicht des erfindungsgemäßen Basislacks, liegen.

Der erfindungsgemäße Basislack (b) ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugte Definitionen des Begriffs "wässrig" in Bezug auf den Basislack (b) erfolgen weiter unten.

Wichtig ist allerdings, dass das Wasser als Bestandteil der Stammlackkomponente eingesetzt wird. Denn bei Kontakt mit Wasser reagiert das hydrophil modifizierte Polyisocyanat (4) wie bereits oben beschrieben. Diese Reaktionen sollen allerdings erst beim Zusammengeben der beiden Komponenten des Basislacks und der dann gewünschten thermisch-chemischen Härtung erfolgen. Demzufolge ist die Härterkomponente (b.2) bevorzugt wasserfrei oder der Härterkomponente (b.2) wird erst kurz vor dem Zusammengeben mit der Stammlackkomponente (b.1), das heißt insbesondere weniger als 5 Minuten vor dem Zusammengeben, das Wasser hinzugefügt.

Als weitere Bestandteile kann der erfindungsgemäße Basislack (b) unterschiedlichste, dem Fachmann auf dem Gebiet bekannte Lackkomponenten enthalten.

So kann der Basislack (b) von den bereits genannten Polymeren verschiedene härtbare Harze als Bindemittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Haftvermittler, Verlaufsmittel, filmbildende Hilfsmittel, Verdicker, Sag-Control-Agents (SCAs), Flammschutzmittel, Korrosionsinhibitoren, Katalysatoren, Wachse, Sikkative, Biozide und/oder Mattierungsmittel enthalten. Die vorgenannte Aufzählung ist selbstverständlich nicht abschließend gemeint.

Der Festkörpergehalt des Basislacks (b) kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke (b) bei 15 bis 70 Gew.-%, besonders bevorzugt bei 17,5 bis 60 Gew.-% und ganz besonders bevorzugt bei 20 bis 50 Gew.-%.

Unter Festkörpergehalt (nicht-flüchtiger Anteil) ist im Rahmen der vorliegenden Erfindung derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird die zu untersuchende Probe, beispielsweise der Basislack, für 60 Minuten bei 130°C eingedampft.

Diese Prüfmethode wird, sofern nicht anders angegeben, ebenfalls angewandt, um beispielsweise den Anteil verschiedener Komponenten an einem Beschichtungsmittel, beispielsweise dem Basislack (b), festzulegen beziehungsweise vorzubestimmen. Es wird also beispielsweise der Festkörper einer Dispersion eines Polyurethanharzes (1), welche dem Basislack zugegeben werden soll, bestimmt. Durch Berücksichtigung des Festkörpers der Dispersion und der in dem Basislack eingesetzten Menge der Dispersion kann dann der Anteil der Komponente an der Gesamtkomposition ermittelt beziehungsweise festgelegt werden.

Bevorzugt ist im Rahmen der vorliegenden Erfindung der Begriff wässriger Basislack (b) wie folgt zu verstehen.

Die prozentuale Summe aus dem Festkörper des Basislacks und dem Anteil von Wasser am Basislack liegt bei mindestens 75 Gew.-%, bevorzugt bei mindestens 85 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise ein Basislack einen Festkörper von 35 % und einen Wassergehalt von 50 Gew.-%, so beträgt die oben definierte prozentuale Summe aus dem Festkörper des Basislacks und dem Anteil von Wasser am Basislack 85 Gew.-%.

Dies bedeutet, dass bevorzugte erfindungsgemäße Basislacke grundsätzlich umweltbelastende Komponenten wie insbesondere organische Lösemittel in einem vergleichsweise niedrigen Anteil von beispielsweise weniger als 25 Gew.-%, bevorzugt weniger als 15 Gew.-% enthalten.

Die erfindungsgemäßen Beschichtungen auf Substraten besitzen eine gute optische Qualität und weisen gleichzeitig eine hohe mechanische Beständigkeit und Flexibilität auf.

Demzufolge ist auch die Verwendung der erfindungsgemäßen Beschichtung zur Erhöhung der Stabilität von Substraten, insbesondere flexiblen Schaumstoffsubstraten gegen mechanische äußere Einflüsse, insbesondere der Abrieb- und Steinschlagbeständigkeit, Gegenstand der vorliegenden Erfindung.

Die Erfindung wird in der Folge anhand einiger Beispiele erläutert.

### Beispiele

### Messmethoden:

### Gelanteil:

Der Gelanteil von Polyurethanharz-Anteilen von entsprechenden wässrigen Dispersionen wird im Rahmen der vorliegenden Erfindung gravimetrisch bestimmt. Dabei wurde zunächst aus einer Probe einer wässrigen Dispersion (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Da manche der eingesetzten wässrigen kommerziell erwerblichen Polymer-Dispersionen zusätzlich noch anorganische Komponenten wie Silikate enthalten, und der Anteil dieser anorganischen Komponenten selbstverständlich bei der Ermittlung des Gelanteils mit erfasst wird, wurden alle Dispersionen verascht (800°C) und der gegebenenfalls bestehende Aschegehalt dann vom ermittelten Gelanteil in Abzug gebracht.

### Glasübergang und Schmelzübergang:

Der Glasübergang wird anhand der Glasübergangstemperatur bestimmt. Die Glasübergangstemperatur wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe des Bindemittels mit einer Nass-Schichtdicke von 100µm mithilfe eines Rakels auf eine Glasplatte aufgebracht, zunächst für 1 Stunde bei 40°C vorgetrocknet und sodann 1 Stunde bei 110°C getrocknet. Zur Messung wird ein Teil des so getrockneten Films von der Glasplatte abgenommen und in die Messhülse eingebracht. Diese wird dann in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird.

Ein Glasübergang ist im DDK-Diagramm als Abschnitt der Messkurve, der betragsmäßig eine im Verhältnis zu den Basislinien vor und nach dem Übergang deutlich größere Steigung besitzt, zu erkennen. Die betragsmäßig größere Steigung ist dabei bekanntermaßen auf die höhere Energiemenge zurückzuführen, die im Bereich der Phasenumwandlung notwendig ist, um die Temperatur zu erhöhen. Ein solcher Messkurvenabschnitt besitzt dann naturgemäß einen Wendepunkt in dem Bereich mit betragsmäßig größerer Steigung. Im Rahmen der vorliegenden Erfindung gilt als Glasübergangstemperatur eines Glasübergangs die Temperatur dieses Wendepunkts im 2. Messlauf.

Die Temperatur, bei dem der Polyurethanharz-Anteil seinen Glasübergang hat, ist im Rahmen der vorliegenden Erfindung wie folgt definiert: Es handelt sich um die Temperatur am Wendepunkt des dem Glasübergang zuzuordnenden Kurvenabschnitts (Glasübergangstemperatur). Möglich ist, dass mehrere Kurvenabschnitte vorhanden sind, die Glasübergängen zuzuordnen sind. Das entsprechende System hat dann mehrere Glasübergänge und Glasübergangstemperaturen. In einem solchen Fall ist die Temperatur, bei der der Polyurethanharz-Anteil seinen Glasübergang hat, die Temperatur am Wendepunkt des Kurvenabschnitts im höchsten Temperaturbereich. Denn in einem solchen Fall ist im entsprechenden Polyurethanharzanteil erst nach dem letzten Glasübergang keinerlei glasartige Struktur mehr vorhanden. Der Ausdruck "seinen Glasübergang" ist also gleichzusetzen mit der Formulierung "seinen vollständigen Glasübergang" beziehungsweise "seinen Glasübergang mit der höchsten Temperatur".

Der Schmelzübergang wird ebenfalls aus dem wie oben beschrieben gemessenen DDK-Diagramm ermittelt. Ein Schmelzübergang stellt sich als ein von der Basislinie im DDK-Diagramm abweichender Bereich dar. Innerhalb dieses Bereichs muss dem System nämlich aufgrund der Phasenumwandlung der Kristallite eine höhere Energiemenge zugeführt werden, um eine Temperaturerhöhung zu bewirken. Diese Bereiche stellen sich bekanntermaßen als verschieden enge oder breite Peaks dar.

Die Temperatur, bei dem der Polyurethanharz-Anteil seinen Schmelzübergang hat, ist im Rahmen der vorliegenden Erfindung wie folgt definiert: Es handelt sich um die Temperatur am Extrempunkt des dem Schmelzübergang zuzuordnenden Peaks. Sind mehrere Peaks vorhanden, die Schmelzübergängen zuzuordnen sind, so handelt es sich um den Extrempunkt des Peaks im höchsten Temperaturbereich. Denn in einem solchen Fall hat das System mehrere Schmelzübergänge. Demnach ist im entsprechenden Polyurethanharzanteil erst nach dem letzten Schmelzübergang keinerlei kristalline Struktur mehr vorhanden. Der Ausdruck "seinen Schmelzübergang" ist also gleichzusetzen mit der Formulierung "seinen vollständigen Schmelzübergang" beziehungsweise "seinen Schmelzübergang mit der höchsten Temperatur".

### 1 Herstellung von Basislacken sowie Beschichtungen hieraus

Die Stammlackkomponenten verschiedener Lacke wurden durch sukzessives Zusammengeben der jeweiligen Bestandteile und inniges Vermischung in einem Dissolver hergestellt (Tabelle 1). Erfindungsgemäß einzusetzende Basislacke (b) tragen das Kürzel E, Vergleichssysteme das Kürzel V. Angegeben sind jeweils die eingesetzten Gewichtsteile der Komponenten. Als Härterkomponente wurde ein polyethermodifiziertes HDI-Isocyanurat mit einem Isocyanatgehalt von 12 %, 70 %-ig in organischen Lösemitteln, eingesetzt.

**Tabelle 1: Stammlackkomponenten**

| **Pos.** | **Komponente** | **b E1** | **b V1** | **b V2** |
|---|---|---|---|---|
| 1 | Wässrige Dispersion (2) | 53,31 | -- | -- |
| 2 | Erste wässrige Dispersion (5)¹ | -- | 29,91 | -- |
| 3 | Vergleichend eingesetzte wässrige Dispersion enthaltend Polyurethan² | -- | -- | 35,53 |
| 4 | Zweite wässrige Dispersion (5) | 17,45 | 17,45 | 17,45 |
| 5 | Dritte wässrige Dispersion (5) | 3,23 | 3,23 | 3,23 |
| 6 | Pigmentpaste gelb 1 | 10,31 | 10,31 | 10,31 |
| 7 | Pigmentpaste weiß 1 | 6,49 | 6,49 | 6,49 |
| 8 | Pigmentpaste gelb 2 | 1,48 | 1,48 | 1,48 |
| 9 | Pigmentpaste schwarz 1 | 0,12 | 0,12 | 0,12 |
| 10 | Pigmentpaste rot 1 | 0,11 | 0,11 | 0,11 |
| 11 | Wasser VE | 7,5 | 7,5 | 7,5 |

| | | | | |
|---|---|---|---|---|
| ¹ Die erste wässrige Dispersion (5) hat einen Festkörper von 50,0 %. Der Polyurethanharz-Anteil hat einen Gelanteil von 82 % und hat seinen Glasübergang bei einer Temperatur von -4°C. Schmelzübergänge bei kleiner 100°C sind nicht vorhanden. Die mittlere Teilchengröße (Volumenmittel) beträgt 210 Nanometer. ² Die Dispersion hat einen Festkörper von 42,1 %. Der Polyurethanharz-Anteil hat einen Gelanteil von 0 % und hat seinen Glasübergang bei einer Temperatur von -4°C. Schmelzübergänge bei kleiner 100°C sind nicht vorhanden. | | | | |

Wässrige Dispersion (2): Die handelsüblichen Dispersion enthält einen Polyurethanharz-Anteil mit einem Gelanteil von 61,3 %. Der Polyurethanharz-Anteil hat seinen Glasübergang bei einer Temperatur von -47°C und seinen Schmelzübergang bei einer Temperatur von 50°C. Der Polyurethanharz-Anteil enthält Partikel mit einer Teilchengröße von 1 bis 100 Mikrometer. Der Festkörper der Dispersion beträgt 26,5 %, wobei davon 1,8 % anorganische Komponenten (Silikate) enthalten sind (bestimmt über Veraschung, 800°C).

Zweite und dritte wässrige Dispersionen (5): Die handelsüblichen Dispersionen enthalten einen Polyurethanharz-Anteil mit einem Gelanteil von 91 % (zweite Dispersion) beziehungsweise 95 % (dritte Dispersion). Die mittlere Teilchengröße (Volumenmittel) beträgt 244 Nanometer (zweite Dispersion) beziehungsweise 56 Nanometer (dritte Dispersion). Die Polyurethanharz-Anteile haben ihren Glasübergang bei -48°C (zweite Dispersion) beziehungsweise -60°C (dritte Dispersion). Schmelzübergange bei unter 100°C sind nicht zu beobachten. Die Festkörper der Dispersionen liegen bei 39,0 (zweite Dispersion) und 37,0 % (dritte Dispersion).

Pigmentpasten: Die Pigmentpasten enthalten als Pastenharz jeweils ein Polyurethanharz (1). Die eingesetzten Polyurethanharze besitzen eine Hydroxylzahl im Bereich zwischen 20 und 40 mg KOH/g und eine Säurezahl im Bereich von 20 bis 30 mg KOH/g. Bei der Herstellung der Polyurethanharze wurden, bezogen auf die jeweilige Gesamtmenge der zur Herstellung des jeweiligen Polyurethanharzes eingesetzten Ausgangsverbindungen, zwischen 30 und 80 Gew.-% eines Polyesterdiols eingesetzt. Die Polyesterdiole wurden unter Einsatz von 55 bis 85 Gew.-% an Dimerfettsäuren, bezogen auf die bei der Herstellung des Polyesterdiols eingesetzten Dicarbonsäuren, hergestellt. Der Anteil der Harze an den Pasten liegt im Bereich von 10 bis 30 Gew.-%. Als Pigmente sind handelsübliche Farbpigmente enthalten (Anteil im Bereich von 5 bis 60 Gew.-%, je nach Pigmentart). Ebenfalls enthalten sind organische Lösemittel (Anteil im Bereich von 30 bis 80 Gew.-%).

Anschließend wurden unter Einsatz der Basislacke Beschichtungen auf Schaumstoffsubstraten hergestellt. Dabei wurde die jeweilige Stammlackkomponente mit der Härterkomponente (Gewichtsverhältnis Stammlack zu Härter 100:8) erst unmittelbar vor der Applikation homogen miteinander vermischt.

Die Applikation erfolgte über die pneumatische Handlackierung. Dabei wurde der Basislack direkt auf das Substrat aufgebracht, für 10 Minuten bei 25°C abgelüftet und dann bei 80°C für 30 Minuten im Umluftofen gehärtet. Die Schichtdicken (gehärtet) betragen jeweils 20-25 µm. Als Substrate dienten thermoplastische Polyurethan-Partikelschaumstoffe in Form von Platten einer Dicke von etwa 1 cm. Die Polyurethan-Partikelschaumstoffe wurden zuvor durch Expansion und Verschmelzung entsprechender Polyurethangranulate mittels Wasserdampf in entsprechenden Formen hergestellt.

Folgende Beschichtungen (M) wurden hergestellt (Tabelle 2):

**Tabelle 2: Beschichtungen**

| | | | |
|---|---|---|---|
| **Beschichtung** | B E1 | B V1 | B V2 |
| **Aufbau** | b E1 | b V1 | b V2 |

### 2 Untersuchungen der Beschichtungen

Die Beschichtungen wurden hinsichtlich ihrer Steinschlagbeständigkeit (nach DIN EN ISO 20567-1) untersucht. Niedrige Werte entsprechen einer guten Steinschlagbeständigkeit. Tabelle 3 zeigt die Ergebnisse.

**Tabelle 3: Steinschlagbeständigkeit**

| Probe | **Steinschlag** |
|---|---|
| **B E1** | 0 |
| **B V1** | 1,5 |
| **B V2** | 1,5 |

Die Ergebnisse zeigen, dass die erfindungsgemäße Beschichtung eine signifikant bessere Steinschlagfestigkeit aufweist, als die Vergleichssysteme.
Es wurde weiterhin die Flexibilität und Elastizität der auf den Schaumstoffsubstraten angeordneten Beschichtungen untersucht. Folgende Tests wurden durchgeführt:
(a) Das beschichtete Substrat wurde über die Kante einer 2mm starken Stahltafel gebogen. Es wurde der Biegewinkel bestimmt, bei dem sich Rissbildung/"Brechen" im Lackaufbau zeigte.
(b) Das beschichtete Substrat wurde mittig mit der beschichteten Seite nach außen gefaltet (180° Biegung) und an beiden Enden angefasst. Die Belastungsprobe wurde durch Verdrehen der Hände in einander entgegengesetzte Richtung durchgeführt ("Twist"-Bewegung). Die beschichteten Substrate wurden anschließend visuell bewertet.
(c) Das beschichtete Substrat wurde mit Hilfe einer 5-Eurocent Münze hinsichtlich seiner Impactfähigkeit getestet. Hierzu wurde die Münze mit ihrer Kante aufrecht auf die Lackoberfläche aufgesetzt und mit stetigem Druck in das Substrat gedrückt. Die maximale Eindrücktiefe lag bei 5 mm.

Folgende Ergebnisse ergaben sich:
Die erfindungsgemäße Beschichtung BE1 zeigte keinerlei Rissbildung/Beschädigung bei einer maximal möglichen Biegung von 180° über die Metallkante (Test (a)). Ebenso konnten nach einer Biegung mit der lackierten Seite nach außen (180°) keine Veränderungen festgestellt werden. Auch die "Twist"-Bewegung zeigte keinerlei Einfluss auf das Erscheinungsbild des Lackes (Test (b)). Beim 5-Eurocent-Impact-Test zeigte Lackaufbau ME1 ebenfalls keinerlei Beschädigung der Oberfläche (Test (c)).

Die Untersuchung von BV1 und BV2 ergab, dass die Beschichtungen zwar nicht einrissen, aber eine im Vergleich zu BE1 stark erhöhte Faltenbildung nach Biege- und Twistbewegung zeigen. Die Faltenrückbildung war deutlich verzögert. Insgesamt ist die Flexibilität und Elastizität der Vergleichssysteme deutlich schlechter als beim System BE1.

### 3 Herstellung weiterer Basislacke, Beschichtungen hieraus sowie Untersuchungen dieser Beschichtungen

Analog des oben genannten Herstellungsverfahrens wurden weitere Beschichtungen hergestellt. Tabelle 4 zeigt die Stammlackkomponenten aller eingesetzten Lacke. Als Härterkomponente wurde wieder ein polyethermodifiziertes HDI-Isocyanurat mit einem Isocyanatgehalt von 12 %, 70 %-ig in organischen Lösemitteln, eingesetzt. Auch das Gewichtsverhältnis von Stammlack zu Härter wurde wiederum zu 100:8 gewählt.

**Tabelle 4: Stammlackkomponenten**

| **Pos.** | **Komponente** | **b E2** | **b V3** | **b V4** |
|---|---|---|---|---|
| 1 | Wässrige Dispersion (2) (siehe Tabelle 1a) | 53,31 | 64,00 | 64,00 |
| 2 | Erste wässrige Dispersion (5) (siehe Tabelle 1a) | 17,45 | 20,76 | 20,76 |
| 3 | Zweite wässrige Dispersion (5) (siehe Tabelle 1a) | 3,23 | 3,85 | 3,85 |
| 4 | Polydimethylsiloxan-basiertes Additiv | -- | 4,39 | 4,39 |
| 5 | Natriumhydroxid wässrig, 25 % | -- | 2,00 | 2,00 |
| 6 | Vergleichend eingesetzte Pigmentzubereitung schwarz 1¹ | -- | 5,00 | -- |
| 7 | Vergleichend eingesetzte Pigmentzubereitung schwarz 2¹ | -- | -- | 5,00 |
| 8 | Pigmentpaste schwarz 1 (Tabelle 1a) | 17,95 | -- | -- |
| 9 | Pigmentpaste weiß 1 (Tabelle 1a) | 1,12 | -- | -- |
| 10 | Pigmentpaste gelb 1 (Tabelle 1a) | 0,93 | -- | -- |
| 11 | Wasser VE | 6,01 | -- | -- |

| | | | | |
|---|---|---|---|---|
| ¹ Die Zubereitungen sind handelsübliche Pigmentpasten, die als Pastenharz ein wasserdispergierbares Acrylatharz enthalten. Der Anteil der Harze an den Pasten liegt im Bereich von 4 bis 7 Gew.-%. Als Pigmente sind handelsübliche Schwarzpigmente enthalten (Anteil im Bereich von 30 bis 70 Gew.-%). | | | | |

**Tabelle 5: Beschichtungen**

| | | | |
|---|---|---|---|
| **Beschichtung** | B E2 | B V3 | B V4 |
| **Aufbau** | b E2 | b V3 | b V4 |

Die Beschichtungen wurden hinsichtlich ihrer Abriebbeständigkeit untersucht. Die Abriebbeständigkeit wurde nach GS97034-5 (BMW) anhand eines Crockmeters (Verfahren B, in Anlehnung an DIN EN ISO 105-X12) durchgeführt (10 Doppelhübe, wobei mit unterschiedlichen Medien befeuchtete Baumwollreibegewebe eingesetzt wurden). Es wird sowohl visuell beurteilt, ob Abriebsspuren auf dem beschichteten Substrat erkennbar sind und auch, ob auf dem verwendeten Baumwollreibegewebe Farbabrieb erkennbar ist. Die Bewertungsskala verläuft von 0 (kompletter Abrieb) bis 5 (keinerlei Abrieb). Tabelle 6 zeigt die Ergebnisse.

**Tabelle 6: Abriebbeständigkeit**

| **Probe** | **Ethanol** | |
|---|---|---|
| | Substrat | Reibegewebe |
| **B E2** | 5 | 5 |
| **B V3** | 5 | 3-4 |
| **B V4** | 5 | 3 |

Die Ergebnisse zeigen, dass die erfindungsgemäße Beschichtung eine signifikant bessere Abriebbeständigkeit aufweist, als die Vergleichssysteme.

## Patentansprüche

1. Wässriger Zweikomponenten-Basislack (b) enthaltend
(b.1) eine Stammkomponente enthaltend
(1) mindestens ein Polyurethanharz mit einer Hydroxylzahl von 15 bis 100 mg KOH/g und einer Säurezahl von 10 bis 50 mg KOH/g,
(2) mindestens eine wässrige Dispersion enthaltend Wasser und einen Polyurethanharz-Anteil bestehend aus mindestens einem Polyurethanharz, wobei der Polyurethanharz-Anteil einen Gelanteil von mindestens 50 % aufweist, seinen Glasübergang bei einer Temperatur von kleiner -20°C hat, seinen Schmelzübergang bei einer Temperatur von kleiner 100°C hat und der Anteil des Polyurethanharz-Anteils in der Dispersion 15 bis 60 Gew.-%, bezogen auf die Gesamtmenge der Dispersion, beträgt.
(3) mindestens ein farb- und/oder effektgebendes Pigment,
wobei mindestens ein Pigment (3) in Form mindestens einer Pigmentpaste eingesetzt wird, die als Pastenharz mindestens ein Polyurethanharz (1) enthält, und
(b.2) eine Härterkomponente enthaltend
(4) mindestens ein hydrophil modifiziertes Polyisocyanat (4) mit einem Isocyanatgehalt von 8 bis 18 gew.-%, wobei Glas- und Schmelzübergang nach der Methode aus der Beschreibung bestimmt werden.

2. Basislack nach Anspruch 1, **dadurch gekennzeichnet, dass** die hydrophil modifizierten Polyisocyanate (4) ausgewählt sind aus der Gruppe der polyether- und/oder polyestermodifizierten Polyisocyanate.

3. Basislack nach Anspruch 2, **dadurch gekennzeichnet, dass** die hydrophil modifizierten Polyisocyanate (4) ausgewählt werden aus der Gruppe der polyoxyethylen-, polyoxypropylen- und/oder gemischt polyoxyethylen-polyoxypropylenmodifizierte Polyisocyanate.

4. Basislack nach Anspruch 3, **dadurch gekennzeichnet, dass** die polyoxyethylen-, polyoxypropylen- und/oder gemischt polyoxyethylen-polyoxypropylenmodifizierten Polyisocyanate ausgewählt werden aus der Gruppe der entsprechend modifizierten Isocyanurate, bevorzugt Isocyanuraten von Hexamethylen-1,6-diisocyanat.

5. Basislack nach einem der Ansprüche 1 bis 4, **dadurch gekennzeichnet, dass** bei der Herstellung des mindestens einen Polyurethanharzes (1), bezogen auf die Gesamtmenge der zur Herstellung des Polyurethanharzes eingesetzten Ausgangsverbindungen, zwischen 30 und 80 Gew.-% mindestens eines Polyesterdiols eingesetzt werden, wobei das mindestens eine Polyesterdiol unter Einsatz von Dimerfettsäuren hergestellt wird.

6. Basislack nach Anspruch 5, **dadurch gekennzeichnet, dass** bei der Herstellung des mindestens einen Polyesterdiols mindestens 50 Gew.-%, bevorzugt 55 bis 85 Gew.-%, der eingesetzten Dicarbonsäuren Dimerfettsäuren sind.

7. Basislack nach einem der Ansprüche 1 bis 6, **dadurch gekennzeichnet, dass** die mindestens eine Pigmentpaste 1 bis 60 Gew.-% mindestens eines Pigments (3), 10 bis 60 Gew.-% mindestens eines Polyurethanharzes (1) sowie 30 bis 80 Gew.-% mindestens eines organischen Lösemittels enthält, wobei die angegebenen Anteile sich auf die Gesamtmenge der Paste beziehen und zusammen mindestens 80 Gew.-%, bevorzugt mindestens 90 Gew.-% des Gesamtgewichts der Paste ausmachen.

8. Basislack nach einem der Ansprüche 1 bis 7, **dadurch gekennzeichnet, dass** der Polyurethanharz-Anteil der mindestens einen Dispersion (2) seinen Glasübergang bei einer Temperatur im Bereich von -100°C bis kleiner -20°C hat, seinen Schmelzübergang bei einer Temperatur im Bereich von -20°C bis kleiner 90°C hat und Partikel mit einer Teilchengröße von größer 1 Mikrometer enthält.

9. Basislack nach einem der Ansprüche 1 bis 8, **dadurch gekennzeichnet, dass** der Basislack (b) zudem mindestens eine weitere wässrige Dispersion (5) enthält, wobei der Polyurethanharz-Anteil der wässrigen Dispersion (5) einen Gelanteil von mindestens 50 % besitzt und in Form von dispergierten Partikeln mit einer mittleren Teilchengröße (Volumenmittel) von 20 bis 500 Nanometern vorliegt.

10. Verfahren zur Herstellung einer Beschichtung auf einem Substrat (S), bei dem ein Basislack nach einem der Ansprüche 1 bis 9 auf das Substrat aufgebracht wird und anschließend gehärtet wird, wodurch eine Basislackschicht (B) entsteht.

11. Verfahren nach Anspruch 10, **dadurch gekennzeichnet, dass** als Substrat ein flexibles Schaumstoffsubstrat, besonders bevorzugt ein flexibles thermoplastisches Polyurethan-Partikelschaumstoffsubstrat eingesetzt wird.

12. Verfahren nach Anspruch 10 oder 11, **dadurch gekennzeichnet, dass** die Basislackschicht (B) direkt auf dem Substrat hergestellt wird und die Basislackschicht (B) die einzige Beschichtungsschicht ist, die hergestellt wird.

13. Verfahren nach einem der Ansprüche 10 bis 12, **dadurch gekennzeichnet, dass** die Basislackschicht (B) Temperaturen zwischen 40 und 120°C, bevorzugt 60 bis 100°C gehärtet wird.

14. Beschichtung, die gemäß dem Verfahren nach einem der Ansprüche 10 bis 13 hergestellt wurde und auf einem Substrat angeordnet ist.

15. Verwendung einer Beschichtung nach Anspruch 14 zur Erhöhung der Stabilität von Substraten gegen mechanische äußere Einflüsse, insbesondere der Abrieb- und Steinschlagbeständigkeit.

## Claims

1. Aqueous two-component basecoat material (b) comprising
(b.1) a base component comprising
(1) at least one polyurethane resin having a hydroxyl number of 15 to 100 mg KOH/g and an acid number of 10 to 50 mg KOH/g,
(2) at least one aqueous dispersion comprising water and a polyurethane resin fraction consisting of at least one polyurethane resin, the polyurethane resin fraction having a gel fraction of at least 50%, having its glass transition at a temperature of less than -20°C, having its melting transition at a temperature of less than 100°C, and the proportion of the polyurethane resin fraction in the dispersion being 15 to 60 wt%, based on the total amount of the dispersion,
(3) at least one colour and/or effect pigment,
at least one pigment (3) being used in the form of at least one pigment paste comprising at least one polyurethane resin (1) as pasting resin,
and
(b.2) a curing component comprising
(4) at least one hydrophilically modified polyisocyanate (4) having an isocyanate content of 8 to 18 wt%, with glass transition and melting transition being determined by the method from the description.

2. Basecoat material according to Claim 1, **characterized in that** the hydrophilically modified polyisocyanates (4) are selected from the group of polyether- and/or polyester-modified polyisocyanates.

3. Basecoat material according to Claim 2, **characterized in that** the hydrophilically modified polyisocyanates (4) are selected from the group of polyoxyethylene-, polyoxypropylene- and/or mixed polyoxyethylene-polyoxypropylene-modified polyisocyanates.

4. Basecoat material according to Claim 3, **characterized in that** the polyoxyethylene-, polyoxypropylene- and/or mixed polyoxyethylene-polyoxypropylene-modified polyisocyanates are selected from the group of the correspondingly modified isocyanurates, preferably isocyanurates of hexamethylene 1,6-diisocyanate.

5. Basecoat material according to any of Claims 1 to 4, **characterized in that** the at least one polyurethane resin (1), based on the total amount of the starting compounds used in preparing the polyurethane resin, is prepared using between 30 and 80 wt% of at least one polyester diol, the at least one polyester diol being prepared using dimer fatty acids.

6. Basecoat material according to Claim 5, **characterized in that** at least 50 wt%, preferably 55 to 85 wt%, of the dicarboxylic acids used in preparing the at least one polyester diol are dimer fatty acids.

7. Basecoat material according to any of Claims 1 to 6, **characterized in that** the at least one pigment paste comprises 1 to 60 wt% of at least one pigment (3), 10 to 60 wt% of at least one polyurethane resin (1), and 30 to 80 wt% of at least one organic solvent, the stated fractions being based on the total amount of the paste and together making up at least 80 wt%, preferably at least 90 wt%, of the total weight of the paste.

8. Basecoat material according to any of Claims 1 to 7, **characterized in that** the polyurethane resin fraction of the at least one dispersion (2) has its glass transition at a temperature in the range from -100°C to less than -20°C, has its melting transition at a temperature in the range from -20°C to less than 90°C, and comprises particles having a particle size of greater than 1 micrometre.

9. Basecoat material according to any of Claims 1 to 8, **characterized in that** the basecoat material (b) further comprises at least one further aqueous dispersion (5), the polyurethane resin fraction of the aqueous dispersion (5) possessing a gel fraction of at least 50% and being present in the form of dispersed particles having an average particle size (volume average) of 20 to 500 nanometres.

10. Method for producing a coating on a substrate (S), in which a basecoat material according to any of Claims 1 to 9 is applied to the substrate and subsequently cured to produce a basecoat (B).

11. Method according to Claim 10, **characterized in that** the substrate used comprises a flexible foam substrate, more preferably a flexible thermoplastic polyurethane bead foam substrate.

12. Method according to Claim 10 or 11, **characterized in that** the basecoat (B) is produced directly on the substrate and the basecoat (B) is the only coat which is produced.

13. Method according to any of Claims 10 to 12, **characterized in that** the basecoat (B) is cured at temperatures between 40 and 120°C, preferably 60 to 100°C.

14. Coating produced by the method according to any of Claims 10 to 13 and disposed on a substrate.

15. Use of a coating according to Claim 14 for increasing the stability of substrates to external mechanical influences, particularly the abrasion resistance and stonechip resistance.

## Revendications

1. Vernis de base aqueux à deux composants (b), contenant
(b.1) un composant souche, contenant
(1) au moins une résine de polyuréthane présentant un indice d'hydroxyle de 15 à 100 mg de KOH/g et un indice d'acide de 10 à 50 mg de KOH/g,
(2) au moins une dispersion aqueuse contenant de l'eau et une proportion de résine de polyuréthane constituée par au moins une résine de polyuréthane, la proportion de résine de polyuréthane présentant une proportion de gel d'au moins 50%, présentant une transition vitreuse à une température inférieure à -20°C, présentant sa transition en masse fondue à une température inférieure à 100°C et la proportion de la proportion de résine de polyuréthane dans la dispersion représentant 15 à 60% en poids, par rapport à la quantité totale de la dispersion,
(3) au moins un pigment conférant une couleur et/ou un effet,
au moins un pigment (3) étant utilisé sous forme d'au moins une pâte pigmentaire, qui contient comme résine de pâte au moins une résine de polyuréthane (1) et
(b.2) un composant durcisseur, contenant
(4) au moins un polyisocyanate modifié de manière hydrophile (4) présentant une teneur en isocyanate de 8 à 18% en poids, la transition vitreuse et la transition en masse fondue étant déterminées selon la méthode de la description.

2. Vernis de base selon la revendication 1, **caractérisé en ce que** les polyisocyanates modifiés de manière hydrophile (4) sont choisis dans le groupe des polyisocyanates modifiés par polyéther et/ou par polyester.

3. Vernis de base selon la revendication 2, **caractérisé en ce que** les polyisocyanates modifiés de manière hydrophile (4) sont choisis dans le groupe des polyisocyanates modifiés par polyoxyéthylène, par polyoxypropylène et/ou de manière mixte par polyoxyéthylène-polyoxypropylène.

4. Vernis de base selon la revendication 3, **caractérisé en ce que** les polyisocyanates modifiés par polyoxyéthylène, par polyoxypropylène et/ou de manière mixte par polyoxyéthylène-polyoxypropylène sont choisis dans le groupe des isocyanurates modifiés de manière correspondante, de préférence des isocyanurates d'hexaméthylène-1,6-diisocyanate.

5. Vernis de base selon l'une quelconque des revendications 1 à 4, **caractérisé en ce qu'**on utilise lors de la préparation de ladite au moins une résine de polyuréthane (1), par rapport à la quantité totale des composés de départ utilisés pour la préparation de la résine de polyuréthane, entre 30 et 80% en poids d'au moins un polyesterdiol, ledit au moins un polyesterdiol étant préparé à l'aide d'acides gras dimères.

6. Vernis de base selon la revendication 5, **caractérisé en ce que**, lors de la préparation dudit au moins un polyesterdiol, au moins 50% en poids, de préférence 55 à 85% en poids, des acides dicarboxyliques utilisés sont des acides gras dimères.

7. Vernis de base selon l'une quelconque des revendications 1 à 6, **caractérisé en ce que** ladite au moins une pâte pigmentaire contient 1 à 60% en poids d'au moins un pigment (3), 10 à 60% en poids d'au moins une résine de polyuréthane (1) ainsi que 30 à 80% en poids d'au moins un solvant organique, les proportions indiquées se rapportant à la quantité totale de la pâte et représentant ensemble au moins 80% en poids, de préférence au moins 90% en poids du poids total de la pâte.

8. Vernis de base selon l'une quelconque des revendications 1 à 7, **caractérisé en ce que** la proportion de résine de polyuréthane de ladite au moins une dispersion (2) présente sa transition vitreuse à une température dans la plage de -100°C à moins de -20°C, sa transition en masse fondue à une température dans la plage de -20°C à moins de 90°C et contient des particules présentant une grosseur de particule supérieure à 1 micromètre.

9. Vernis de base selon l'une quelconque des revendications 1 à 8, **caractérisé en ce que** le vernis de base (b) contient en outre au moins une autre dispersion aqueuse (5), la proportion de résine de polyuréthane de la dispersion aqueuse (5) présentant une proportion de gel d'au moins 50% et se trouvant sous forme de particules dispersées d'une grosseur moyenne de particule (moyenne en volume) de 20 à 500 nm.

10. Procédé pour la réalisation d'un revêtement sur un substrat (S), dans lequel un vernis de base selon l'une quelconque des revendications 1 à 9 est appliqué sur le substrat et ensuite durci, suite à quoi une couche de vernis de base (B) est formée.

11. Procédé selon la revendication 10, **caractérisé en ce qu'**on utilise, comme substrat, un substrat souple en mousse, de manière particulièrement préférée un substrat souple thermoplastique en mousse de particules de polyuréthane.

12. Procédé selon la revendication 10 ou 11, **caractérisé en ce que** la couche de vernis de base (B) est réalisée directement sur le substrat et la couche de vernis de base (B) est la seule couche de revêtement qui est réalisée.

13. Procédé selon l'une quelconque des revendications 10 à 12, **caractérisé en ce que** la couche de vernis de base (B) est durcie à des températures entre 40 et 120°C, de préférence de 60 à 100°C.

14. Revêtement qui est réalisé selon le procédé selon l'une quelconque des revendications 10 à 13 et disposé sur un substrat.

15. Utilisation d'un revêtement selon la revendication 14 pour augmenter la stabilité de substrats contre des influences mécaniques externes, en particulier la résistance à l'abrasion et aux impacts par des pierres.
